(19) 

**Europäisches Patentamt**
**European Patent Office**
**Office européen des brevets**

(11) **EP 4 674 620 A1**

(12) **EUROPEAN PATENT APPLICATION**
published in accordance with Art. 153(4) EPC

(43) Date of publication:
**07.01.2026 Bulletin 2026/02**

(21) Application number: **24763599.8**

(22) Date of filing: **13.02.2024**

(51) International Patent Classification (IPC):
**B32B 27/32** (2006.01)    **B65D 65/40** (2006.01)

(52) Cooperative Patent Classification (CPC):
**B32B 27/32; B65D 65/40**

(86) International application number:
**PCT/JP2024/004871**

(87) International publication number:
**WO 2024/181115 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023030131**
**28.02.2023 JP 2023030144**

(71) Applicant: **Toppan Holdings Inc.**
**Tokyo 110-0016 (JP)**

(72) Inventors:
• **TANAKA Ryota**
**Tokyo 110-0016 (JP)**
• **GODA Haruka**
**Tokyo 110-0016 (JP)**

(74) Representative: **Hoffmann Eitle**
**Patent- und Rechtsanwälte PartmbB**
**Arabellastraße 30**
**81925 München (DE)**

(54) **LAYERED ARTICLE, PACKAGING MATERIAL AND PACKAGE**

(57) A laminated body having a structure in which a substrate layer and a sealant layer are laminated in this order, wherein the substrate layer and the sealant layer include polyethylene, and the substrate layer has machine direction (MD) elongation rates of (i) 0.5 to 3.0% when a tension of 50 N/m is applied at 70 °C and (ii) 2.0 to 5.0% when a tension of 50 N/m is applied at 90 °C, or a tensile elastic modulus of the substrate layer in a machine direction is 800 to 2000 MPa at 23 °C.

FIG.1

EP 4 674 620 A1

## Description

[Technical Field]

The present invention relates to a laminated body, a packaging material using the laminated body, and a packaging body. More specifically, the present invention relates to a laminated body that has superior recyclability of materials and a light environmental load, and a packaging material and a packaging body using the laminated body.

[Background Art]

For a packaging bag, combinations of various materials are used depending on properties of contents to be packed, the amount of the contents, post-treatment for preventing transformation of the contents, manner of transporting the packaging bag, method of opening the packaging bag, method of disposal, or the like.

For example, for a packaging bag of a flexible package using laminated films, combinations of a biaxially-oriented film such as polypropylene and polyester for obtaining mechanical strength of the packaging bag, and a sealant film such as polyethylene, polypropylene, and an ethylene-vinyl acetate copolymer for sealing the contents as a packaging bag, are used. In addition, in order to suppress deterioration of the contents, an aluminum foil or an ethylene-vinylalcohol copolymer are also laminated on the films.

A laminated body using the above various materials having separate functions was designed with emphasis on suitability for each process such as packing, transportation, storage, and opening of the contents. However, due to increase of awareness of recent ecological problems, functions such as resource-saving and recyclability of various products have been emphasized, and similar functions have also been required for a laminated body used for a packaging bag. Typically, it is considered that if the percentage of a principal resin included in a packaging material is 90 mass% or greater, recyclability is high. However, since a great number of conventional packaging materials include a plurality of resin materials and, in some cases, paper or metallic materials, and do not meet the above criteria, currently, they are not recycled.

Herein, Patent Literature 1 describes a laminated body including a substrate, an adhesion layer, and a heat seal layer, the substrate and the heat seal layer being formed of polyethylene. Forming the substrate and the heat seal layer using the same material facilitates meeting of the above criteria of the recyclability.

[Citation List]

[Patent Literature]

Patent Literature 1: JP-A-2020-55157

[Summary of the Invention]

[Technical Problem]

However, for example, if a liquid is accommodated as contents in a packaging bag produced using the laminated body described in Patent Literature 1, and the packaging bag is dropped, there is a risk that the packaging bag may be broken due to impact, whereby the contents leak.

In addition, the packaging bag produced using the laminated body described in Patent Literature 1 has a risk that, for example, when the packaging bag strikes a case or another packaging bag during transportation, the packaging bag may be broken due to the impact, whereby the contents leak.

As described above, conventional packaging bags having superior recyclability have room for improvement from the viewpoint of impact resistance and in practice have a problem that they are limited to being used in light packaging.

Hence, the present invention has an object of providing a laminated body that has superior recyclability and superior impact resistance, and a packaging material and a packaging body using the laminated body.

[Solution to Problem]

A first exemplary aspect of the present invention includes the following [1] to [14].

[1] A laminated body including a structure in which a substrate layer and a sealant layer are laminated in this order, wherein
the substrate layer and the sealant layer include polyethylene, and

the substrate layer has machine direction (MD) elongation rates of (i) and (ii):

> (i) an elongation rate of 0.5 to 3.0% when a tension of 50 N/m is applied at 70 °C;
> (ii) an elongation rate of 2.0 to 5.0% when a tension of 50 N/m is applied at 90 °C.

[2] The laminated body according to [1], further including an intermediate layer between the substrate layer and the sealant layer, the intermediate layer including polyethylene.

[3] The laminated body according to [2], wherein
the intermediate layer has MD direction elongation rates of (i) and (ii):

> (i) an elongation rate of 0.5 to 3.0% when a tension of 50 N/m is applied at 70 °C;
> (ii) an elongation rate of 2.0 to 5.0% when a tension of 50 N/m is applied at 90 °C.

[4] The laminated body according to any one of [1] to [3], further including a protective layer on a side of the substrate layer opposite to a side facing toward the sealant layer.

[5] The laminated body according to claim [4], wherein
the protective layer includes a thermosetting resin.

[6] The laminated body according to any one of [1] to [5], wherein
the substrate layer is a biaxially-oriented film.

[7] The laminated body according to any one of [1] to [6], further including a deposition layer between the substrate layer and the sealant layer.

[8] The laminated body according to [1], wherein
the substrate layer and the sealant layer are laminated via a first adhesive layer, and the first adhesive layer includes a urethane-based adhesive.

[9] The laminated body according to [2] or [3], wherein
the substrate layer and the intermediate layer are laminated via a first adhesive layer, the intermediate layer and the sealant layer are laminated via a second adhesive layer, and the second adhesive layer includes a gas barrier adhesive.

[10] The laminated body according to any one of [1] to [9], wherein
the sealant layer is white in color.

[11] The laminated body according to any one of [1] to [10], wherein
a percentage of polyethylene in the laminated body is 90 mass% or greater.

[12] A packaging material including the laminated body according to any one of [1] to [11].

[13] The packaging material according to [12], wherein
the packaging material is a standing pouch.

[14] A packaging body including:
the packaging material according to [12] or [13]; and contents accommodated in the packaging material.

A second exemplary aspect of the present invention includes the following [1] to [16].

[1] A laminated body including a structure in which a substrate layer and a sealant layer are laminated in this order, wherein

> the substrate layer and the sealant layer include polyethylene, and
> a tensile elastic modulus of the substrate layer in a machine direction (MD) is 800 to 2000 MPa at 23 °C.

[2] The laminated body according to [1], further including an intermediate layer between the substrate layer and the sealant layer, the intermediate layer including polyethylene.

[3] The laminated body according to [2], wherein
a tensile elastic modulus of the intermediate layer in the machine direction (MD) is lower than 800 MPa at 23 °C.

[4] The laminated body according to any one of [1] to [3], further including a protective layer on a side of the substrate layer opposite to a side facing toward the sealant layer.

[5] The laminated body according to [4], wherein
the protective layer includes a thermosetting resin.

[6] The laminated body according to any one of [1] to [5], wherein
the substrate layer is a biaxially-oriented film.

[7] The laminated body according to any one of [1] to [6], further including a deposition layer between the substrate layer and the sealant layer.

[8] The laminated body according to [1], wherein
the substrate layer and the sealant layer are laminated via a first adhesive layer, and the first adhesive layer includes a urethane-based adhesive.

[9] The laminated body according to [8], wherein
a difference between the tensile elastic modulus of the substrate layer in the machine direction (MD) and the tensile elastic modulus of the sealant layer in the machine direction (MD) is 300 to 1400 MPa at 23 °C.

[10] The laminated body according to [2] or [3], wherein
the substrate layer and the intermediate layer are laminated via a first adhesive layer, the intermediate layer and the sealant layer are laminated via a second adhesive layer, and the second adhesive layer includes a gas barrier adhesive.

[11] The laminated body according to [10], wherein
a difference between the tensile elastic modulus of the substrate layer in the machine direction (MD) and the tensile elastic modulus of the intermediate layer in the machine direction (MD) is 300 to 1400 MPa at 23 °C.

[12] The laminated body according to any one of [1] to [11], wherein the sealant layer is white in color.

[13] The laminated body according to any one of [1] to [12], wherein
a percentage of polyethylene in the laminated body is 90 mass% or greater.

[14] A packaging material including the laminated body according to any one of [1] to [13].

[15] The packaging material according to [14], wherein
the packaging material is a standing pouch.

[16] A packaging body including:
the packaging material according to [14] or [15]; and contents accommodated in the packaging material.

[Advantageous Effects of the Invention]

According to the present invention, a laminated body that has superior recyclability and superior impact resistance, and a packaging material and a packaging body using the laminated body can be provided.

That is, for example, even if a liquid is accommodated as contents in a packaging bag produced using the laminated body according to the first aspect of the present invention, and the packaging bag is dropped, breakage of the bag and leakage of the contents can be suppressed.

In addition, a packaging bag produced using the laminated body according to the second aspect of the present invention has superior resistance (especially, pinhole resistance) to bending occurring due to impact with a case or another packaging bag during transportation and bending occurring due to crumpling, folding, or the like, thereby suppressing the contents from leaking.

[Brief Description of the Drawings]

[FIG. 1] FIG. 1 is a schematic sectional view illustrating an embodiment of a laminated body according to the present invention.

[FIG. 2] FIG. 2 is a schematic sectional view illustrating an embodiment of a laminated body according to the present invention.

[Description of the Embodiments]

Hereinafter, embodiments of the present invention will be described in detail with appropriate reference to the drawings. However, the present invention is not limited to the following embodiments.

<First laminated body>

A laminated body (first laminated body) according to a first aspect of the present embodiment has a structure in which a substrate layer and a sealant layer are laminated in this order.

The substrate layer and the sealant layer include polyethylene.

The substrate layer has machine direction (MD) elongation rates of (i) and (ii).

(i) An elongation rate of 0.5 to 3.0% when a tension of 50 N/m is applied at 70 °C.
(ii) An elongation rate of 2.0 to 5.0% when a tension of 50 N/m is applied at 90 °C.

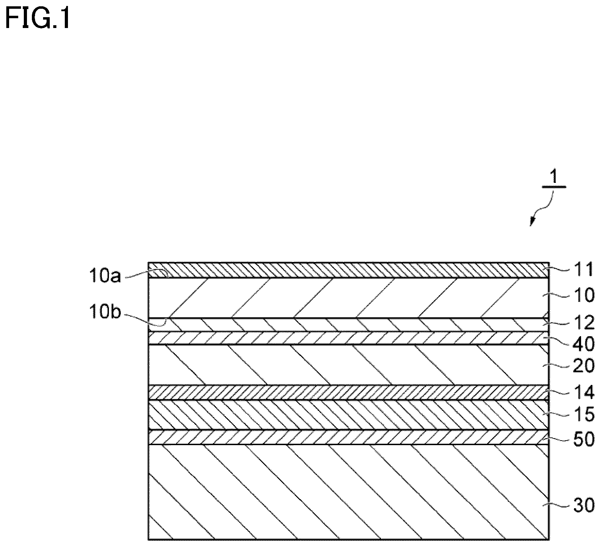

FIG. 1 is a schematic sectional view illustrating an embodiment of a laminated body (a first laminated body and a second laminated body described later) of the present invention. A laminated body 1 illustrated in FIG. 1 includes a substrate layer 10, a first adhesive layer 40, an intermediate layer 20, a second adhesive layer 50, and a sealant layer 30.

The substrate layer 10 has a protective layer 11 on an outer surface 10a side thereof. The intermediate layer 20 has a deposition layer 14 on one surface thereof.

The substrate layer 10 has a printed layer 12 on an inner surface 10b side thereof. The intermediate layer 20 has a gas barrier coating layer 15 on the deposition layer 14 thereof. Hereinafter, each of the layers will be described.

(Substrate layer)

The substrate layer 10 is a layer including polyethylene and may be a layer configured by a polyethylene film. The polyethylene film may be a film including polyethylene at 70 mass% or greater or 85 mass% or greater, or a film including polyethylene at 100 mass%.

The substrate layer 10 is a portion serving as an outer surface when a packaging material is formed using the laminated body 1. However, as illustrated in FIG. 1, the outer surface of the substrate layer 10 may be protected by the protective layer 11. The surface of the substrate layer 10 may be subjected to adhesion-enhancement processing by dry surface treatment such as corona treatment or atmospheric pressure plasma treatment.

The substrate layer has MD direction (Machine Direction) elongation rates of (i) and (ii).

(i) An elongation rate of 0.5 to 3.0% when a tension of 50 N/m is applied at 70 °C.
(ii) An elongation rate of 2.0 to 5.0% when a tension of 50 N/m is applied at 90 °C.

Flexibility and hardness of the polyethylene film used for the substrate layer can be adjusted using the presence or absence of stretching, the degree of stretching (stretching ratio), or resin density. Although a hard polyethylene film is superior in puncture strength, it easily suffers breakage because stress due to impact is not easily distributed in an impact resistance test (drop test). In contrast, although a soft polyethylene film has a certain degree of impact resistance, the film easily stretches due to impact stress and may suffer breakage because the thickness of the film decreases in some parts.

In contrast, the substrate layer (polyethylene film) having the above MD direction elongation rate has appropriate flexibility, which is neither too hard nor too soft, and is superior in impact resistance. It is noted that the polyethylene film that has been conventionally used in the present technical field is typically a non-oriented film or a uniaxially-oriented film. A non-oriented film is flexible and easily stretches when heat and tension are applied. Since a uniaxially- oriented film is stretched in one of the machine direction (MD direction) and the transverse direction (TD direction), molecular orientation of polyethylene becomes even, and the film becomes hard in the stretched direction, whereby the film resists elongation due to the applied heat and tension. It is noted that although a polyethylene film having appropriate hardness and flexibility can be produced by, for example, biaxially-oriented film formation using a high-density polyethylene resin, there is a problem in film formation quality. As described above, it is difficult to achieve the above MD direction elongation rate using polyethylene films that have been conventionally used in the present technical field.

The MD direction elongation rate is measured by thermo-mechanical analysis (TMA). TMA is a method of measuring deformation of a sample with temperature while applying a non-oscillatory load (constant load(tension)) to the sample. The MD direction elongation rate is specifically defined as below.

The MD direction elongation rate (%) = ((Film length in MD direction when tension is applied at arbitrary temperature) - (Film length in MD direction when no tension is applied at room temperature)) / (Film length in MD direction when no tension is applied at room temperature)

From the viewpoint that when a deflection temperature under load (heat deformation temperature) of polyethylene is in the vicinity of 70°C, flexibility of the film can be evaluated, an MD direction elongation rate of the polyethylene film at 70°C is measured.

From the viewpoint of assuming a pressure test in a case in which hot filling of fluid contents is performed, an MD direction elongation rate of the polyethylene film at 90°C is measured.

From the viewpoint of tension applied when printing is performed on a substrate layer and laminating of the substrate layer is performed, an MD direction elongation rate is measured while a tension of 50 N/m is applied to the polyethylene film.

When a tension of 50 N/m is applied at 70°C, the substrate layer has appropriate softness if the MD direction elongation rate of the substrate layer is 0.5 % or higher, and the substrate layer has appropriate hardness if the MD direction elongation rate is 3.0 % or lower. From this viewpoint, the MD direction elongation rate of the substrate layer in the above (i) is preferably 0.8 % or higher and 2.5% or lower, and more preferably 1.2 % or higher and 2.0 % or lower.

When a tension of 50 N/m is applied at 90°C, the substrate layer has appropriate softness if the MD direction elongation rate of the substrate layer is 2.0 % or higher, and the substrate layer has appropriate hardness if the MD direction elongation rate is 5.0 % or lower. From this viewpoint, the MD direction elongation rate of the substrate layer in the above (ii) is preferably 2.4 % or higher and 4.5% or lower, and more preferably 2.8 % or higher and 4.0 % or lower.

The MD direction elongation rate of the substrate layer can be adjusted by, for example, a method of adjusting a thickness of the polyethylene film, adjusting a film formation method or a stretching method for the polyethylene film, adjusting the type of polyethylene included in the polyethylene film (molecular weight or density), or using a polyethylene film having a multilayer structure. However, the method of adjusting the MD direction elongation rate is not limited to these.

As the substrate layer 10, a film formed of high-density polyethylene (density of 0.94 $g/cm^3$ or higher) can be used. Using the high-density polyethylene film easily meets the above MD direction elongation rate. The high-density polyethylene film may be petroleum-derived, plant-derived, or a mixture of these. The density of the substrate layer 10 is measured using a density measuring device BELPYCNO produced by MicrotracBEL Corp.

As the substrate layer 10, a polyethylene film having a multilayer structure produced by extruding polyethylene having different densities using a coextrusion method (e.g., a structure of polyethylene other than high-density polyethylene / high-density polyethylene / polyethylene other than high-density polyethylene) or a polyethylene film having a multilayer structure produced by extruding polyethylene and a polyolefin other than polyethylene using the coextrusion method (e.g., a structure of polypropylene / polyethylene / polypropylene) can be used. Using such a polyethylene film having a multilayer structure in which a surface of a core layer has skin layers having different characteristics (flexibility) easily meets the above MD direction elongation rate. For example, from the viewpoint of easily meeting the above MD direction elongation rate, the percentage of the core layer in the polyethylene film having a multilayer structure may be 70 mass% or greater and may be 95 mass% or less. Alternatively, the percentage of the thickness of the core layer with respect to the thickness of the polyethylene film having a multilayer structure may be 70 % or greater and may be 95 % or less.

The thickness of the substrate layer 10 is preferably 10 $\mu$m or more and 50 $\mu$m or less, more preferably 12 $\mu$m or more and 35 $\mu$m or less, and still more preferably 20 $\mu$m or more and 30 $\mu$m or less.

When the thickness of the substrate layer 10 is 10 $\mu$m or more, strength of the laminated body 1 can be improved, and the above MD direction elongation rate can easily be the above upper limit or lower.

When the thickness of the substrate layer 10 is 50 $\mu$m or less, processability of the laminated body 1 can be improved, and the above MD direction elongation rate can easily be the above lower limit or higher.

The substrate layer 10 can be prepared by forming a polyethylene film using a T-die method or an inflation method.

When the substrate layer 10 is prepared using the T-die method, the melt flow rate (MFR) of polyethylene is preferably 3 g/10 minutes or higher and 20 g/10 minutes or lower. If the MFR is set to 3 g/10 minutes or higher, processability of the laminated body can be improved. In addition, if the MFR is set to 20 g/10 minutes or lower, breakage of the prepared substrate layer 10 can be prevented.

When the substrate layer 10 is prepared using the inflation method, the MFR of polyethylene is preferably 0.5 g/10 minutes or higher and 5 g/10 minutes or lower. If the MFR is set to 0.5 g/10 minutes or higher, processability of the laminated body can be improved. In addition, if the MFR is set to 5 g/10 minutes or lower, film formation quality can be improved.

The polyethylene film configuring the substrate layer 10 may be an oriented film or a biaxially-oriented film from the viewpoint of easily meeting the above MD direction elongation rate. As a stretching method used in a case in which a biaxially-oriented film is used, for example, a successive biaxial orientation method, a tubular biaxial orientation method, a simultaneous biaxial orientation method, or the like may be used. The biaxially-oriented film is preferably stretched using the simultaneous biaxial orientation method from the viewpoint of easily meeting the above MD direction elongation rate.

The haze of the polyethylene film configuring the substrate layer 10 is preferably 3% or higher, and more preferably 5% or higher, from the viewpoint that as a degree of orientation is higher, the haze is lower, and the MD direction elongation rate in TMA is lower. The haze is preferably 30% or lower, and more preferably 20% or lower, from the viewpoint that as the degree of orientation is lower, the haze is higher, and the MD direction elongation rate in TMA is higher and from the viewpoint of ensuring visibility. The haze is measured using a haze meter NDH7000 produced by NIPPON DENSHOKU INDUSTRIES CO., LTD. in conformity with JIS K 7136.

The melting point of the polyethylene (e.g., high-density polyethylene) used as the substrate layer 10 is approximately 120 °C to 140 °C. In contrast, the melting point of the polyethylene (e.g., low-density polyethylene) used as the sealant layer 30 described later is approximately 90 °C to 120 °C. To subject a laminated body of the substrate layer 10 and the sealant layer 30 for heat sealing, a heat seal bar, which is a jig of a heat-sealing machine, is heated approximately at 130 °C to 140 °C, and heat is transferred to the sealant layer 30 through the substrate layer 10 and the intermediate layer 20 described later, whereby heat welding is performed.

(Protective layer)

The protective layer 11 prevents problems caused when heat sealing is performed for bag-making or filling and sealing. Specifically, when the substrate layer 10 and the heat seal bar contact each other, problems in appearance such as wrinkling and occurrence of adhesion (sticking) of the substrate layer 10 to the heat seal bar due to the heat welding can be suppressed. Considering such a function, the protective layer 11 may be provided as the outermost layer of the laminated body.

The thickness of the laminated body can be changed depending on the weight of contents to be packed. Typically, when light contents are packed, the thickness is decreased considering the cost, and when a heavy load is filled, the thickness is increased considering the strength. As the thickness of the laminated body increases, the heat quantity required for the heat seal surface of the sealant layer to cause thermal fusion increases. Hence, the thickness of the protective layer 11 is preferably changed in proportion to the total thickness of the laminated body. The percentage of the thickness of the protective layer 11 with respect to the total thickness of the laminated body is preferably 0.4% or higher and 2.0% or lower. If the percentage is 0.4% or higher, desired heat resistance is easily obtained, and further superior heat-sealing properties can be obtained. If the percentage is 2.0% or lower, wastage of materials for the protective layer 11 can be suppressed, and the heat quantity required for heat sealing can be suppressed from increasing.

Although the thickness of the protective layer 11 is adjusted depending on the total thickness of the laminated body as described above, from the viewpoint of improving heat resistance and reducing the heat quantity required for heat sealing, the thickness of the protective layer 11 may be, for example, 0.1 to 5.0 $\mu$m, 0.2 to 4.0 $\mu$m, or 0.3 to 2.0 $\mu$m.

The protective layer 11 provided on the outer surface of the substrate layer 10 requires heat resistance so that it does not undergo softening, melting, decomposition, and the like, even when the protective layer 11 is heated, for example, at 140 °C during heat sealing. Hence, the protective layer 11 preferably includes a thermosetting resin or a resin having a melting point of 160 °C or higher. The resin is preferably at least one type of resin selected from a group consisting of polyurethane, polyester, polyamide, polyamide-imide, and epoxy. The protective layer 11 can be formed using a coating agent including the resin described above or a material that is cured to generate the resin described above.

When the protective layer 11 is formed using a resin having a melting point of 160 °C or higher, although the melting point of the resin may be 160 °C or higher, from the viewpoint of obtaining superior heat resistance, the melting point may be 180 °C or higher, or 200 °C or higher. As a resin having a melting point of 160 °C or higher, for example, EVOH, polypropylene, nylon, or the like may be used.

Means of forming the protective layer 11 include a method of coating the substrate layer 10 with a dispersion in which the resin described above or the raw material thereof is dispersed in water or a coating fluid in which the resin described above or the raw material thereof is dissolved in an organic solvent, and drying (curing) it to form the protective layer 11, and a method in which, in film formation of the substrate layer 10, coextrusion is performed via an adhesive resin such as maleic anhydride modified polyethylene to form the film.

Examples of the polyurethane include dispersion such as the TAKELAC W and WS series produced by Mitsui Chemicals, Inc., the ETERNACOLL series produced by UBE Corporation, the HYDRAN series produced by DIC Corporation, and the ADEKA BONTIGHTER HUX series produced by ADEKA CORPORATION, and solvent-type coating fluids such as the TAKELAC E series produced by Mitsui Chemicals, Inc. and the BURNOCK series produced by DIC Corporation.

Examples of the polyester include dispersion such as VYLONAL produced by Toyobo Co., Ltd., ARON MELT produced by TOAGOSEI CO.,LTD., and elitel produced by UNITIKA LTD., and solvent-type coating fluids such as the BURNOCK series produced by DIC Corporation.

Examples of polyamide include nylon 6 or nylon 12 synthesized by a combination of $\omega$-amino acids and nylon 66 synthesized by a combination of diamine and a dicarboxylic acid.

Examples of polyamide-imide include the VYLOMAX series produced by Toyobo Co., Ltd.

Examples of epoxy include the ADEKA NEWCOAT series produced by the ADEKA CORPORATION, DENACOL series produced by Nagase ChemteX Corporation, and the jER series produced by Mitsubishi Chemical Corporation.

When the protective layer 11 is provided by applying and drying (curing) a coating agent, in order to improve adhesion between the substrate layer 10 and the protective layer 11, an adhesion-enhancement layer may be provided on the substrate layer 10 provided that recyclability is not impaired.

In addition, in film formation of the substrate layer 10, when the protective layer 11 is formed by coextrusion via an adhesive resin together with polyethylene forming the substrate layer 10, as a material of the protective layer 11, polyamide (nylon) can be exemplified. In this case, by using an inflation method or a T-die method, each of polyethylene, maleic modified polyethylene, and polyamide is heated and melted, and the substrate layer 10 is subjected to coextrusion to form the film.

(Printed layer)

The printed layer 12 can be formed on the outer surface 10a of the substrate layer 10 located on the side on which the protective layer 11 is formed, or the inner surface 10b of the substrate layer 10 located on the side on which the substrate layer 10 is laminated on the intermediate layer 20. The method of forming the printed layer 12 (image) is not specifically limited. The printed layer 12 can be formed by typical gravure printing or flexo printing using ink corresponding thereto. The ink may be a solvent-based ink or aqueous ink. However, from the environmental viewpoint, using aqueous ink is preferable. In addition, the outer surface 10a or the inner surface 10b of the substrate layer 10 may be subjected to surface treatment such as corona treatment or plasma treatment in order to improve adhesion of the printed layer 12.

(Intermediate layer)

The intermediate layer 20 is a layer including polyethylene, and may be, for example, a non-oriented film or an oriented film (biaxially-oriented film) configured by polyethylene. The surface of the intermediate layer 20 can be subjected to adhesion-enhancement processing using dry surface treatment such as corona treatment or atmospheric pressure plasma treatment.

Herein, the non-oriented polyethylene film refers to a polyethylene film that is not subjected to stretching processing when film formation is performed and has a structure in which spherical crystals (spherocrystals) of approximately 10 to 100 $\mu$m configured by randomly folded polyethylene molecular chains are connected by non-crystalline molecules. The non-oriented polyethylene film has properties that when large impact is applied, the spherocrystals are broken, and the molecular chains are orientated and stretched, whereby breakage of the film itself can be prevented. Hence, a packaging body (configured by preparing a packaging bag, filling contents therein, and sealing it) prepared from a laminated body in which non-oriented polyethylene films are laminated as the intermediate layer 20 and the sealant layer 30 has characteristics such that the bag has superior drop strength.

The intermediate layer can have the above MD direction elongation rates of (i) and (ii).

When a tension of 50 N/m is applied at 70°C, the intermediate layer has appropriate softness if the MD direction elongation rate of the intermediate layer is 0.5 % or higher, and the intermediate layer has appropriate hardness if the MD direction elongation rate is 3.0 % or lower. From this viewpoint, the MD direction elongation rate of the intermediate layer in the above (i) is preferably 0.5 % or higher and 2.5% or lower, preferably 0.8 % or higher and 2.1% or lower, and more preferably 1.2 % or higher and 1.7 % or lower.

When a tension of 50 N/m is applied at 90°C, the intermediate layer has appropriate softness if the MD direction elongation rate of the intermediate layer is 2.0 % or higher, and the intermediate layer has appropriate hardness if the MD direction elongation rate is 5.0 % or lower. From this viewpoint, the MD direction elongation rate of the intermediate layer in the above (ii) is preferably 2.0 % or higher and 4.0% or lower, preferably 2.4 % or higher and 3.6% or lower, and more preferably 2.8 % or higher and 3.2 % or lower.

In contrast, the intermediate layer can have MD direction elongation rates of (iii) and (iv).

(iii) An elongation rate of 2.5% or higher when a tension of 50 N/m is applied at 70 °C.
(iv) An elongation rate of 4.0% or higher when a tension of 50 N/m is applied at 90 °C.

When a tension of 50 N/m is applied at 70°C, the intermediate layer has sufficient softness if the MD direction elongation rate of the intermediate layer is 2.5 % or higher, whereby adhesion between the substrate layer and the sealant layer can be easily exhibited. From this viewpoint, the MD direction elongation rate of the intermediate layer in the above (iii) is preferably 2.8 % or higher, and more preferably 3.0 % or higher. The upper limit of the MD direction elongation rate of the intermediate layer in the above (iii) may be, from the view point of lamination processability, 30 % or 10 %.

When a tension of 50 N/m is applied at 90°C, the intermediate layer has sufficient softness if the MD direction elongation rate of the intermediate layer is 4.0 % or higher, whereby adhesion between the substrate layer and the sealant layer can be easily exhibited. From this viewpoint, the MD direction elongation rate of the intermediate layer in the above (iv) is preferably 4.5 % or higher, and more preferably 5.0 % or higher. The upper limit of the MD direction elongation rate of the intermediate layer in the above (iv) may be, from the view point of lamination processability, 30 % or 10 %.

The MD direction elongation rate of the intermediate layer 20 can be also adjusted using various methods as in the substrate layer 10.

As the intermediate layer 20, a film formed of high-density polyethylene (density of 0.94 g/cm$^3$ or higher) can be used. Using the high-density polyethylene film easily meets the above MD direction elongation rate (e.g., the range of the elongation rate to be used can be adjusted depending on the stretching method or the like). The high-density polyethylene film may be petroleum-derived, plant-derived, or a mixture of these. As the intermediate layer 20, as in the substrate layer 10, a non-oriented polyethylene film having a multilayer structure produced by extruding polyethylene having different densities using a coextrusion method, or the like can be used.

The thickness of the intermediate layer 20 is preferably 9 $\mu$m or more and 50 $\mu$m or less, more preferably 12 $\mu$m or more and 35 $\mu$m or less, and still more preferably 12 $\mu$m or more and 30 $\mu$m or less. When the thickness of the intermediate layer 20 is 9 $\mu$m or more, strength and heat resistance of the laminated body can be improved, and the above MD direction elongation rate can easily be the above upper limit or lower. When the thickness of the intermediate layer 20 is 50 $\mu$m or less, processability of the laminated body can be improved, and the above MD direction elongation rate can easily be the above lower limit or higher.

The intermediate layer 20 can be prepared by forming a polyethylene film using a T-die method or an inflation method. When the intermediate layer 20 is prepared using the T-die method, the melt flow rate (MFR) of polyethylene is preferably 3 g/10 minutes or higher and 20 g/10 minutes or lower. If the MFR is set to 3 g/10 minutes or higher, processability of the laminated body can be improved. In addition, if the MFR is set to 20 g/10 minutes or lower, breakage of the prepared film can be prevented.

When the intermediate layer 20 is prepared using the inflation method, the MFR of polyethylene is preferably 0.5 g/10 minutes or higher and 5 g/10 minutes or lower. If the MFR is set to 0.5 g/10 minutes or higher, processability of the laminated body can be improved. In addition, if the MFR is set to 5 g/10 minutes or lower, film formation quality can be improved.

The haze of the polyethylene film configuring the intermediate layer 20 is preferably 3% or higher, and more preferably 5% or higher, from the viewpoint that as a degree of orientation is higher, the haze is lower and the MD direction elongation rate in TMA is lower. The haze is preferably 30% or lower, and more preferably 20% or lower, from the viewpoint that as the degree of orientation is lower, the haze is higher and the MD direction elongation rate in TMA is higher, and from the viewpoint of ensuring visibility.

(Deposition layer)

In the laminated body 1, on at least one surface of the intermediate layer 20, the deposition layer 14 may be formed. In the present embodiment, although the deposition layer 14 is formed on a surface of the intermediate layer 20 opposed to the second adhesive layer 50, the deposition layer 14 may be formed on an opposite surface. The deposition layer 14 applies oxygen barrier properties and water vapor barrier properties to the laminated body 1.

As the configuration of the deposition layer 14, for example., a deposition layer formed of metallic oxide such as aluminum oxide, silicon oxide, magnesium oxide, and tin oxide can be used. From the viewpoint of transparency and barrier properties, the metallic oxide may be selected from a group consisting of aluminum oxide, silicon oxide, and magnesium oxide. Furthermore, considering the cost, the metallic oxide is selected from aluminum oxide and silicon oxide. Furthermore, from the viewpoint of superior tensile stretch properties during processing, a layer using silicon oxide is more preferable. Since the deposition layer 14 is a barrier film formed of metallic oxide, high barrier properties can be obtained using an extremely thin layer that does not affect recyclability of the laminated body 1.

Due to having transparency, the deposition layer formed of metallic oxide has an advantage of not easily misleading a user obtaining a packaging material formed of a laminated body into believing that a metal foil is used, compared with a deposition layer formed of metal.

The film thickness of the deposition layer formed of aluminum oxide is preferably 5 nm or more and 30 nm or less. If the film thickness is 5 nm or more, sufficient gas barrier properties can be obtained. If the film thickness is 30 nm or less, cracking can be suppressed from occurring due to deformation due to internal stresses in the thin film, whereby deterioration of the gas barrier properties can be suppressed. It is noted that if the film thickness exceeds 30 nm, since the cost easily increases due to increase of the amount of materials used and prolonged time for film formation, it is not preferable also from the economic viewpoint. From a viewpoint similar to the above, the film thickness of the deposition layer is preferably 7 nm or more and 15 nm or less.

The film thickness of the deposition layer formed of silicon oxide is preferably 10 nm or more and 50 nm or less. If the film thickness is 10 nm or more, sufficient gas barrier properties can be obtained. If the film thickness is 50 nm or less, cracking can be suppressed from occurring due to deformation due to internal stresses in the thin film, whereby deterioration of the gas barrier properties can be suppressed. It is noted that if the film thickness exceeds 50 nm, since the cost easily increases due to increase of the amount of materials used, prolonging the time for film formation, it is not preferable also from the economic viewpoint. From a viewpoint similar to the above, the film thickness of the deposition layer is preferably 20 nm or more and 40 nm or less.

The deposition layer 14 can be formed by, for example, vacuum film formation. In vacuum film formation, physical vapor deposition or chemical vapor deposition can be used. Examples of the physical vapor deposition include, but are not limited to, a vacuum deposition method, a sputtering method, an ion plating method, or the like. Examples of the chemical vapor deposition include, but are not limited to, a thermal CVD method, a plasma CVD method, a photo CVD method, or the like.

In the above vacuum film formation, particularly, a resistance heating vacuum deposition method, an EB (Electron Beam) heating vacuum deposition method, an induction heating vacuum deposition method, a sputtering method, a reactive sputtering method, a dual magnetron sputtering method, a plasma-enhanced chemical vapor deposition (PECVD method), or the like is preferably used. However, considering productivity, the vacuum deposition method is currently the most superior. As a heating means in the vacuum deposition method, any of an electron beam heating method, a resistance heating method, and an induction heating method is preferably used.

On the surface of the intermediate layer 20 on which the deposition layer 14 is formed, an anchor coat layer may be formed using a known anchor coat agent. Hence, adhesion of the deposition layer formed of metallic oxide can be improved. As the anchor coat agent, a polyester-based polyurethane resin, a polyether-based polyurethane resin, an acrylic urethane resin, and the like can be exemplified. From the viewpoint of heat resistance and interlayer adhesion strength, a polyester-based polyurethane resin is preferable.

Furthermore, in order to improve adhesion with the first adhesive layer 40, the second adhesive layer 50, the deposition layer 14, and the anchor coat layer described above, the surface corresponding to the intermediate layer 20 may be subjected to surface treatment such as corona treatment or plasma treatment.

As the anchor coat agent, a polyvinyl alcohol-based resin may be used. As the polyvinyl alcohol-based resin, one having a vinyl alcohol unit in which a vinylester unit is subjected to saponification may be used, and, for example, polyvinyl alcohol (PVA) or an ethylene-vinyl alcohol copolymer (EVOH) can be used.

When a polyvinyl alcohol-based resin is used as the anchor coat agent, as a method of forming the anchor coat layer, application using a polyvinyl alcohol-based resin solution, multi-layer extrusion, or the like can be used. In the case of the multi-layer extrusion, lamination may be performed via an adhesive resin such as maleic anhydride graft modified polyethylene.

(Gas barrier coating layer)

In order to improve gas barrier properties and protect the deposition layer 14, the gas barrier coating layer 15 may be provided on the deposition layer 14. Although not especially limited, the gas barrier coating layer 15 may include a hydroxy group-containing polymer compound, specifically, may be a heat-dried product of a composition containing at least any of a hydroxyl group-containing polymer compound and a hydrolysate thereof and at least one selected from a group consisting of metal alkoxide, a silane coupling agent, and a hydrolysate thereof.

The gas barrier coating layer 15 can be formed using, for example, a composition obtained by adding a hydroxyl group-containing polymer compound and metal alkoxide and/or a silane coupling agent to water or a water/alcohol mixed liquid (hereinafter, referred to as an overcoat agent). The overcoat agent can be prepared by, for example, mixing a solution obtained by dissolving a hydroxyl group-containing polymer compound, which is a water-soluble polymer, in an aqueous (water or a water/alcohol liquid mixture) medium, with metal alkoxide and/or a silane coupling agent directly, or with one obtained by previously subjecting these to processing such as hydrolysis.

As the hydroxyl group-containing polymer compound, polyvinyl alcohol, an ethylene-vinyl alcohol copolymer, polyvinylpyrrolidone, starch, methylcellulose, carboxymethylcellulose, alginate sodium, or the like can be used. Among these, using polyvinyl alcohol (PVA) for the overcoat agent of the gas barrier coating layer is preferable because of specific superior gas barrier properties thereof.

As the metal alkoxide, a compound expressed by the following general formula (I) can be used.

$$M(OR^1)_m(R^2)_{n^-m} \ldots \qquad (I)$$

In the above general formula (I), each of $R^1$ and $R^2$ is independently a monovalent organic group having a carbon number of 1 to 8 and is preferably an alkyl group such as a methyl group and an ethyl group. M indicates an n-valent metal atom such as Si, Ti, Al, and Zr. m is an integer of 1 to n. It is noted that when multiple $R^1$ or $R^2$ are present, the multiple $R^1$ or $R^2$ may be the same or different from each other.

As the metal alkoxide, specifically, tetraethoxysilane $[Si(OC_2H_5)_4]$, triisopropoxy aluminum $[Al(O-2'-C_3H_7)_3]$, or the like can be used. Tetraethoxysilane and the triisopropoxy aluminum are preferable because they are relatively stable in an aqueous medium after hydrolysis.

As the silane coupling agent, a compound expressed by the following general formula (II) can be used.

$$Si(OR^{11})_p(R^{12})_{3^-p}R^{13} \ldots \qquad (II)$$

In the above general formula (II), $R^{11}$ indicates an alkyl group such as a methyl group, an ethyl group, and the like, $R^{12}$ indicates a monovalent organic group such as an alkyl group, an aralkyl group, an aryl group, an alkenyl group, an alkyl group for which an acryloxy group is substituted, and an alkyl group for which a methacryloxy group is substituted, $R^{13}$ indicates a monovalent organic functional group, and p is an integer of 1 to 3. It is noted that when multiple $R^{11}$ or $R^{12}$ are present, the multiple $R^{11}$ or $R^{12}$ may be the same or different from each other. As the monovalent organic functional group indicated by $R^{13}$, a monovalent organic functional group containing a glycidyloxy group, an epoxy group, a mercapto group, a hydroxyl group, an amino group, an alkyl group in which a halogen atom is substituted, or an isocyanate group can be used.

As the silane coupling agent, specifically, a vinyltrimethoxysilane, $\gamma$-chloropropylmethyldimethoxysilane, $\gamma$-chloropropyltrimethoxysilane, glycidyloxypropyltrimethoxysilane, $\gamma$-methacryloxypropyltrimethoxysilane, $\gamma$-methacryloxypropylmethyldimethoxysilane, and the like can be used.

In addition, the silane coupling agent may be a multimer in which compounds expressed by the above general formula (II) are polymerized. As the multimer, a trimer is preferable, and 1, 3, 5-tris (3-trialkoxysilylalkyl) isocyanurate is more preferable. This is a condensation polymer of 3-isocyanatoalkylalkoxysilane. It is known that, in this 1, 3, 5-tris (3-trialkoxysilylalkyl) isocyanurate, although the isocyanate part has no chemical reactivity, reactivity is ensured due to the polarity of a nurate moiety. Typically, this is added to an adhesive agent or the like as in 3-isocyanatoalkylalkoxysilane, which is known as an adhesion improver. Hence, adding 1, 3, 5-tris (3-trialkoxysilylalkyl) isocyanurate to a hydroxy group-containing polymer compound can improve water resistance of the gas barrier coating layer by hydrogen bonding. 3-isocyanatoalkylalkoxysilane has high reactivity and low liquid stability. However, although the nurate moiety has no water solubility due to the polarity thereof, 1, 3, 5-tris (3-trialkoxysilylalkyl) isocyanurate is easily dispersed in an aqueous solution, whereby stable liquid viscosity can be kept. In addition, the water resistance performance of 3-isocyanatoalkylalkoxysilane and 1, 3, 5-tris (3-trialkoxysilylalkyl) isocyanurate is equivalent.

1, 3, 5-tris (3-trialkoxysilylalkyl) isocyanurate may be produced using thermal condensation of 3-isocyanatepropylalkoxysilane or includes 3-isocyanatepropylalkoxysilane, which is a raw material. However, there is no particular problem. 1, 3, 5-tris (3-trialkoxysilylpropyl) isocyanurate is more preferable. 1, 3, 5-tris (3-trimethoxysilylpropyl) isocyanurate is further more preferable. Since the hydrolysis rate of the methoxy group is high, and one including a propyl group is easily available at relatively low cost, 1, 3, 5-tris (3-trimethoxysilylpropyl) isocyanurate is advantageous in practical use.

The amount of metal alkoxide in the overcoat agent may be, from the viewpoint of adhesion with the deposition layer and of maintaining gas barrier properties, 1 to 4 parts by mass or 2 to 3 parts by mass relative to 1 parts by mass of the hydroxy group-containing polymer compound. Similarly, the amount of a silane coupling agent may be 0.01 to 1 parts by mass or 0.1 to 0.5 parts by mass relative to 1 parts by mass of the hydroxy group-containing polymer compound. When a silane compound (alkoxysilane) is used as the metal alkoxide, the amount of the silane compound (metal alkoxide and a silane coupling agent) in the overcoat agent may be 1 to 4 parts by mass or 2 to 3 parts by mass relative to 1 parts by mass of the hydroxy group-containing polymer compound.

To the overcoat agent, within a range not impairing barrier properties, an isocyanate compound or known additive agents such as a dispersant, a stabilizer, a viscosity modifier, a colorant, and the like can be added as needed.

The overcoat agent can be applied using, for example, a dipping method, a roll coating method, a gravure coating method, a reverse gravure coating method, an air knife coating method, a comma coating method, a die coating method, a screen printing method, a spray coating method, a gravure offset method, or the like. A coated film provided by applying the overcoat agent can be dried using, for example, a hot air drying method, a heat roll drying method, a high-frequency irradiation method, an infrared irradiation method, a UV irradiation method, or a combination thereof.

The temperature at which the coated film is dried can be, for example, 50 to 150 °C, and is preferably 70 to 100 °C. Setting the temperature at which drying is performed within the above range can further suppress occurrence of cracking in the deposition layer and the gas barrier coating layer, and can produce superior barrier properties.

The gas barrier coating layer may be formed by using an overcoat agent including a hydroxyl group-containing polymer compound (e.g., a polyvinyl alcohol-based resin) and a silane compound. To the overcoat agent, an acid catalyst, an alkali catalyst, a photopolymerization initiator, or the like may be added.

As the silane compound, a silane coupling agent, polysilazane, siloxane, or the like can be used, and specifically, tetramethoxysilane, tetraethoxysilane, glycidoxypropyltrimethoxysilane, acryloxypropyltrimethoxysilane, hexamethyldisilazane, or the like can be used.

The thickness of the gas barrier coating layer is preferably 50 to 1000 nm, and more preferably 100 to 500 nm. If the thickness of the gas barrier coating layer is 50 nm or more, it tends to be able to obtain further sufficient gas barrier properties. If the thickness is 1000 nm or less, it tends to be able to maintain sufficient flexibility.

(Sealant layer)

The sealant layer 30 is configured by polyethylene and is joined by thermal fusion (heat-sealing) when a packaging material such as a packaging bag is formed using the laminated body 1. The polyethylene configuring the sealant layer 30 is preferably, from the viewpoint of heat-sealing properties, low-density polyethylene (LDPE), a straight-chain low-density polyethylene (LLDPE), or a very low-density polyethylene (VLDPE). In addition, from the viewpoint of environmental loads, biomass-derived polyethylene or recycled polyethylene is preferably used for the sealant layer 30. The sealant layer 30 may be configured by a non-oriented polyethylene film.

As the low-density polyethylene, polyethylene having a density of 0.900 g/cm$^3$ or higher and lower than 0.925

g/cm$^3$ can be used. As the straight-chain low-density polyethylene, polyethylene having a density of 0.900 g/cm$^3$ or higher and lower than 0.925 g/cm$^3$ can be used. As the very low-density polyethylene, polyethylene having a density of lower than 0.900 g/cm$^3$ can be used. As the sealant layer 30, a copolymer of ethylene and another monomer can be used within a range that does not impair characteristics of the laminated body 1.

The thickness of the sealant layer 30 can be appropriately changed depending on weight or the like of contents to be filled in a prepared packaging material. For example, when a packaging bag to be filled with contents of 1 g or greater and 200 g or less is prepared, the thickness of the sealant layer 30 is preferably 20 $\mu$m or more and 60 $\mu$m or less. If the thickness is 20 $\mu$m or more, the filled contents can be prevented from leaking due to breakage of the sealant layer 30. If the thickness is 60 $\mu$m or less, processability of the laminated body 1 can be improved.

As another example, when a standing pouch to be filled with contents of 50 g or greater and 2000 g or less is prepared, the thickness of the sealant layer 30 is preferably 50 $\mu$m or more and 200 $\mu$m or less. If the thickness is 50 $\mu$m or more, the filled contents can be prevented from leaking due to breakage of the sealant layer 30. In addition, if the thickness is 200 $\mu$m or less and preferably 150 $\mu$m or less, processability of the laminated body 1 can be improved.

To the polyethylene used for the substrate layer 10, the intermediate layer 20, and the sealant layer 30, an additive agent such as an antioxidant, an anti-static agent, a nucleating agent, an ultraviolet absorber, and the like may be added.

The sealant layer 30 may be transparent or may be opaque. In the later case, the sealant layer 30 is preferably white in color. When a laminated body having a transparent sealant layer 30 is used as a packaging material, contents can easily be visually recognized. When a laminated body having an opaque sealant layer 30 is used as a packaging material, visibility of images displayed by the printed layer is easily improved.

(Adhesive layer)

The first adhesive layer 40 contains at least one type of adhesive and is provided between the substrate layer 10 and the intermediate layer 20 to join them. When the intermediate layer 20 is not used, the first adhesive layer 40 may be provided between the substrate layer 10 and the sealant layer 30 to join them. The second adhesive layer 50 contains at least one type of adhesive and is provided between the intermediate layer 20 and the sealant layer 30 to join them. For example, any adhesive such as a single-component curable or a two-component curable urethane-based adhesive can be also used for the first adhesive layer 40 and the second adhesive layer 50. In addition, any of a solvent adhesive and a solventless adhesive can be used for the first adhesive layer 40 and the second adhesive layer 50. In order to further improve barrier properties, these adhesives may include a layered inorganic compound.

From the viewpoint of suppressing change in dimension of a printed image when lamination is performed in a case in which the printed layer is provided to the substrate layer, the first adhesive layer 40 may be formed using a solventless adhesive. As the solventless adhesive, a urethane-based adhesive, an epoxy-based adhesive, a silicone-based adhesive or the like can be used. However, from the viewpoint of impact resistance, a urethane-based adhesive is preferable, and a two-component curable urethane-based adhesive is particularly preferably.

The two-component curable urethane-based solventless adhesive includes a polyol component and a polyisocyanate component, which is a curing agent.

The polyol component may be a one selected from a group consisting of a polyester polyol, polyether polyol, polyether ester polyol, and polyurethane polyol or a mixture of two or more selected from the group.

The polyester polyol may be, for example, an ester reaction product of a polycarboxylic acid, dialkyl ester of the polycarboxylic acid, and a mixture thereof, and a glycol-based solvent. The polycarboxylic acid may be, for example, succinic acid, glutaric acid, isophthalic acid, terephthalic acid, adipic acid, pimelic acid, suberic acid, azelaic acid, sebacic acid, dodecanedioic acid, or dimer acid. The glycol-based solvent may be, for example, ethylene glycol, diethylene glycol, triethylene glycol, propylene glycol, dipropylene glycol, tripropylene glycol, butylene glycol, neopentyl glycol, or 1, 6-hexanediol.

The polyether polyol may be, for example, a polymer of an oxirane compound and low molecular-weight polyol. The oxirane compound may be, for example, ethylene oxide, propylene oxide, butylene oxide, or tetrahydrofuran. The low molecular-weight polyol may be water, ethylene glycol, propylene glycol, trimethylolpropane, or glycerin.

The polyether ester polyol may be, for example, obtained by a reaction between a polycarboxylic acid, dialkyl ester of the polycarboxylic acid, and a mixture thereof, and polyether polyol.

The polyurethane polyol may be, for example, a reaction product of a polyester polyol, polyether polyol, or polyether ester polyol, and a polyisocyanate monomer.

The polyisocyanate component may be aliphatic polyisocyanate, aromatic polyisocyanate, or a mixture thereof.

The aliphatic polyisocyanate may be, for example, a polyisocyanate monomer, a polyisocyanate derivative, or a polyisocyanate-terminated prepolymer. The polyisocyanate monomer may be, for example, tetramethylene diisocyanate, isopropylene diisocyanate, 1, 6-hexamethylene diisocyanate, dodecamethylene diisocyanate, or trimethyl hexamethylene diisocyanate. The polyisocyanate derivative may be 1, 3-cyclohexylene diisocyanate, 1, 4-cyclohexylene diisocyanate, lysine diisocyanate, or isophorone diisocyanate.

The aromatic polyisocyanate may be, for example, a polyisocyanate monomer, a polyisocyanate derivative, or a polyisocyanate-terminated prepolymer. The polyisocyanate monomer may be, for example, tolylene diisocyanate, phenylene diisocyanate, diphenyl methane diisocyanate, naphthalene diisocyanate, xylylene diisocyanate, or tetramethyl xylylene diisocyanate. The polyisocyanate derivative may be, for example, an isocyanurate derived from a polyisocyanate monomer. The polyisocyanate-terminated prepolymer may be a bifunctional polyisocyanate containing a terminal isocyanate group obtained by reaction of a polyisocyanate monomer and a bifunctional polyol compound such as polypropylene glycol. In addition, the polyisocyanate-terminated prepolymer may be multifunctional polyisocyanate containing a terminal isocyanate group obtained by reaction of a polyisocyanate monomer and a tri-or higher functional polyol compound such as trimethylolpropane.

The second adhesive layer 50 may be formed using a solvent adhesive from the viewpoint of resistance to contents. As the solvent adhesive, a urethane-based adhesive, an epoxy-based adhesive, a silicone-based adhesive, or the like can be used. However, from the viewpoint of impact resistance, a urethane-based adhesive is preferable, and a two-component curable urethane-based adhesive is particularly preferably. Although the solvent used for the solvent adhesive is not especially limited, for example, ethyl acetate, methanol, isopropyl alcohol, methyl ethyl ketone, ethanol, or the like can be used.

The coating amount (weight per unit area) of each adhesive layer is preferably 0.5 g/m$^2$ or more and 3.0 g/m$^2$ or less, and more preferably 1.0 g/m$^2$ or more and 2.0 g/m$^2$ or less. If the coating amount of the adhesive layer is 0.5 g/m$^2$ or more, an effect of suppressing delamination between the layers is increased. If the coating amount of the adhesive layer is 3.0 g/m$^2$ or less, winding deviation can be suppressed from occurring when the laminated body is processed, and superior quality of external appearance of the laminated body can be obtained. In addition, appropriate lamination strength can be obtained.

The adhesive may be able to produce gas barrier properties after being cured (gas barrier adhesive). That is, the adhesive layer may include the gas barrier adhesive and may be referred to as a cured product of the gas barrier adhesive. Specifically, if an adhesive layer contacting a deposition layer is formed using an adhesive producing gas barrier properties, deterioration of the gas barrier properties due to cracking in the deposition layer can be further suppressed. Hence, the gas barrier properties of the laminated body 1 can be further improved. As the gas barrier adhesive, an epoxy-based adhesive, a polyester·polyurethane-based adhesive, a polyamine-based adhesive, or the like can be used. Specific examples include MAXIVE produced by MITSUBISHI GAS CHEMICAL COMPANY, INC., PASLIM produced by DIC Corporation, and the like.

For example, when the laminated body has two layers (a substrate layer and a sealant layer), any of a solventless adhesive and a solvent adhesive may be used for adhesion between the layers. When resistance or barrier properties to contents are required, a solvent adhesive or a gas barrier adhesive can be used.

For example, when the laminated body has three layers (a substrate layer, an intermediate layer, and a sealant layer), a solventless adhesive can be used for a first adhesive layer (between the substrate layer and the intermediate layer), and a solvent adhesive can be used for a second adhesive layer (between the intermediate layer and the sealant layer).

The thicknesses of the first adhesive layer 40 and the second adhesive layer 50 are preferably 0.5 $\mu$m or more and 6 $\mu$m or less, more preferably 0.8 $\mu$m or more and 5 $\mu$m or less, and further more preferably 1.0 $\mu$m or more and 4.5 $\mu$m or less. If the thicknesses of the first adhesive layer 40 and the second adhesive layer 50 are 0.5 $\mu$m or more, adhesion of the first adhesive layer 40 and the second adhesive layer 50 can be improved. If the thicknesses of the first adhesive layer 40 and the second adhesive layer 50 are 6 $\mu$m or less, processability of the laminated body 1 can be improved.

The first adhesive layer 40 and the second adhesive layer 50 can be formed using various known methods such as a direct gravure roll coating method, a gravure roll coating method, a kiss coating method, a reverse roll coating method, a fountain method, and a transfer roll coating method.

In the laminated body 1 of the present embodiment configured as described above, since the substrate layer 10, the intermediate layer 20, and the sealant layer 30 are configured by polyethylene, the percentage of polyethylene in the laminated body 1 is 90 mass% or greater. Hence, the laminated body 1 has high recyclability. When all of the substrate layer 10, the intermediate layer 20, and the sealant layer 30 are formed of only polyethylene, the percentage of polyethylene in the laminated body 1 (mass%) can be calculated by the following expression (1).

(Mass of the substrate layer 10 + Mass of the intermediate layer 20 + Mass of the sealant layer 30) / Mass of the entire laminated body 1 * 100          (1)

<Second laminated body>

A laminated body (second laminated body) according to a second aspect of the present embodiment has a structure in which a substrate layer and a sealant layer are laminated in this order.

The substrate layer and the sealant layer include polyethylene.

A tensile elastic modulus of the substrate layer in the machine direction (MD) is 800 to 2000 MPa at 23 °C.

(Substrate layer)

The substrate layer 10 is a layer including polyethylene and may be a layer configured by a polyethylene film. The polyethylene film may be a film including polyethylene at 70 mass% or greater or 85 mass% or greater, or a film including polyethylene at 100 mass%.

The substrate layer 10 is a portion serving as an outer surface when a packaging material is formed using the laminated body 1. However, as illustrated in FIG. 1, the outer surface of the substrate layer 10 may be protected by the protective layer 11. The surface of the substrate layer 10 may be subjected to adhesion-enhancement processing by dry surface treatment such as corona treatment or atmospheric pressure plasma treatment.

A tensile elastic modulus of the substrate layer in the machine direction (MD) (tensile elastic modulus of the substrate layer) is 800 to 2000 MPa at 23 °C.

Flexibility and hardness of the polyethylene film used for the substrate layer can be adjusted with presence or absence of stretch, the degree of stretch (stretching ratio), or a resin density. Although a hard polyethylene film is superior in puncture strength, it is easily broken (pinholes are easily generated) because stress due to external impact is difficult to disperse. In addition, cohesive failure is likely to occur in the film, whereby adhesion with an adjacent layer is likely to decrease. In contrast, although a soft polyethylene film has a certain degree of impact resistance, the film is likely to stretch due to stress due to an impact and may be damaged (pinholes are easily generated) because the thickness of the film is likely to decrease in parts thereof.

In contrast, the substrate layer (polyethylene film) having the above tensile elastic modulus has appropriate flexibility, which is neither too hard nor too soft, and is superior in impact resistance. It is noted that a polyethylene film that has been conventionally used in the present technical field is typically a non-oriented film or a uniaxially-oriented film. The non-oriented film is flexible and easily stretches when heat and tension are applied. Since the uniaxially-oriented film is stretched in one of the machine direction (MD direction) and the transverse direction (TD direction), molecular orientation of polyethylene becomes even, and the film becomes hard in the stretched direction, whereby the film is difficult to stretch due to the applied heat and tension. It is noted that although a polyethylene film having appropriate hardness and flexibility can be produced by, for example, biaxially-oriented film formation using a high-density polyethylene resin, there is a problem in film formation quality. As described above, it is difficult for a polyethylene film that has been conventionally used in the present technical field to have the above tensile elastic modulus.

A tensile elastic modulus of a film is measured as below.

In conformity with JIS K 7161, for a film having a size given by a width of 15 mm * a length of 5 cm (the length direction is the MD direction), a tensile test is performed at 23 °C with a distance of 5 cm between chucks and at a tensile rate of 200 mm/min using, for example, a TENSILON universal testing instrument RTC-1250 produced by ORIENTEC CO., LTD. In this case, a gradient of a stress/strain curve corresponding to a region between two strain points from a tensile extension percentage of 0.05 % to 0.25 % is set as a tensile elastic modulus of the film.

If the tensile elastic modulus in the machine direction (MD) of the substrate layer is 800 MPa or higher at 23 °C, the substrate layer is difficult to stretch because the substrate layer has appropriate hardness. If the tensile elastic modulus is 2000 MPa or lower, stress due to external impact is easily dispersed because the substrate layer has appropriate softness. From this viewpoint, the tensile elastic modulus is preferably 900 MPa or higher and 1800 MPa or lower, and more preferably 1000 MPa or higher and 1500 MPa or lower.

When the substrate layer and the sealant layer are laminated via the first adhesive layer, the difference between the tensile elastic modulus of the substrate layer in the machine direction (MD) and the tensile elastic modulus of the sealant layer in the machine direction (MD) (the tensile elastic modulus of the substrate layer - the tensile elastic modulus of the sealant layer) is preferably 300 to 1400 MPa at 23 °C.

If the difference is 300 MPa or higher, when a load is applied to the laminated body, the layers are easily suppressed from being stretched. If the difference is 1400 MPa or lower, adhesion between the layers easily becomes superior. Hence, impact resistance of the laminated body is further improved. From this viewpoint, the difference between the tensile elastic moduli is preferably 500 MPa or higher and 1200 MPa or lower, and more preferably 600 MPa or higher and 900 MPa or lower.

When the substrate layer and the intermediate layer are laminated via the first adhesive layer, the difference between the tensile elastic modulus of the substrate layer in the machine direction (MD) and the tensile elastic modulus of the intermediate layer in the machine direction (MD) (the tensile elastic modulus of the substrate layer - the tensile elastic modulus of the intermediate layer) is preferably 300 to 1400 MPa at 23 °C.

If the difference is 300 MPa or higher, when a load is applied to the laminated body, stretching of the layers is easily suppressed. If the difference is 1400 MPa or lower, adhesion between the layers easily becomes superior. Hence, impact resistance of the laminated body is further improved. From this viewpoint, the difference between the tensile elastic moduli is preferably 500 MPa or higher and 1200 MPa or lower, and more preferably 600 MPa or higher and 900 MPa or lower.

The tensile elastic modulus of the substrate layer can be adjusted by, for example, a method of adjusting a film formation method or a stretching method for the polyethylene film, adjusting the type of polyethylene included in the polyethylene film (molecular weight or density), or using a polyethylene film having a multilayer structure. However, the method of adjusting the tensile elastic modulus is not limited to these.

As the substrate layer 10, a film formed of high-density polyethylene (density of 0.94 g/cm$^3$ or higher) can be used. Using the high-density polyethylene film easily meets the above tensile elastic modulus. The high-density polyethylene film may be petroleum-derived, plant-derived, or a mixture thereof. The density of the substrate layer 10 is measured using a density measuring device BELPYCNO produced by MicrotracBEL Corp.

As the substrate layer 10, a polyethylene film having a multilayer structure produced by extruding polyethylene having different densities using a coextrusion method (e.g., a structure of polyethylene other than high-density polyethylene / high-density polyethylene / polyethylene other than high-density polyethylene), or a polyethylene film having a multilayer structure produced by extruding polyethylene and polyolefin other than polyethylene using the coextrusion method (e.g., a structure of polypropylene / polyethylene / polypropylene) can also be used. Using such a polyethylene film having a multilayer structure in which a surface of a core layer has skin layers having different characteristics (flexibility) easily meets the above tensile elastic modulus. For example, from the viewpoint of easily meeting the above tensile elastic modulus, the percentage of the core layer in the polyethylene film having a multilayer structure may be 70 mass% or greater and may be 95 mass% or less. Alternatively, the percentage of the thickness of thickness of the core layer with respect to the thickness of the polyethylene film having a multilayer structure may be 70 % or greater and may be 95 % or less.

The thickness of the substrate layer 10 is preferably 10 μm or more and 50 μm or less, more preferably 12 μm or more and 35 μm or less, and still more preferably 20 μm or more and 30 μm or less.

When the thickness of the substrate layer 10 is 10 μm or more, strength of the laminated body 1 can be improved.

When the thickness of the substrate layer 10 is 50 μm or less, processability of the laminated body 1 can be improved.

The substrate layer 10 can be prepared by forming a polyethylene film using a T-die method or an inflation method.

When the substrate layer 10 is prepared using the T-die method,
the melt flow rate (MFR) of polyethylene is preferably 3 g/10 minutes or higher and 20 g/10 minutes or lower. If the MFR is set to 3 g/10 minutes or higher, processability of the laminated body can be improved. In addition, if the MFR is set to 20 g/10 minutes or lower, breakage of the prepared substrate layer 10 can be prevented.

When the substrate layer 10 is prepared using the inflation method, the MFR of polyethylene is preferably 0.5 g/10 minutes or higher and 5 g/10 minutes or lower. If the MFR is set to 0.5 g/10 minutes or higher, processability of the laminated body can be improved. In addition, if the MFR is set to 5 g/10 minutes or lower, film formation quality can be improved.

The polyethylene film configuring the substrate layer 10 may be an oriented film or a biaxially-oriented film from the viewpoint of easily meeting the above tensile elastic modulus. As a stretching method used in a case in which a biaxially-oriented film is used, for example, a successive biaxial orientation method, a tubular biaxial orientation method, a simultaneous biaxial orientation method, or the like may be used. The biaxially-oriented film is preferably stretched using the simultaneous biaxial orientation method from the view point of easily meeting the above tensile elastic modulus.

The haze of the polyethylene film configuring substrate layer 10 is preferably 3% or higher and more preferably 5% or higher from the viewpoint that as a degree of orientation is higher, the haze is lower, and the elastic modulus is higher. The haze is preferably 30% or lower, and more preferably 20% or lower, from the viewpoint that as the degree of orientation is lower, the haze is higher, and the elastic modulus is lower and from the viewpoint of ensuring visibility. The haze is measured using a haze meter NDH7000 produced by NIPPON DENSHOKU INDUSTRIES CO., LTD. in conformity with JIS K 7136.

The melting point of the polyethylene (e.g., high-density polyethylene) used as the substrate layer 10 is approximately 120 °C to 140 °C. In contrast, the melting point of the polyethylene (e.g., low-density polyethylene) used as the sealant layer 30 described later is approximately 90 °C to 120 °C. To subject a substrate layer of the substrate layer 10 and the sealant layer 30 for heat sealing, a heat seal bar, which is a jig of a heat-sealing machine, is heated approximately at 130 °C to 140 °C, and heat is transferred to the sealant layer 30 through the substrate layer 10 and the intermediate layer 20 described later, whereby heat welding is performed.

(Protective layer)

Regarding the protective layer, the description of the first laminated body should be referred to.

(Printed layer)

Regarding the printed layer, the description of the first laminated body should be referred to.

(Intermediate layer)

The intermediate layer 20 is a layer including polyethylene, and may be, for example, a non-oriented film or an oriented film (biaxially-oriented film) configured by polyethylene. The surface of the intermediate layer 20 can be subjected to adhesion-enhancement processing using dry surface treatment such as corona treatment or atmospheric pressure plasma treatment.

Herein, the non-oriented polyethylene film refers to a polyethylene film that is not subjected to stretching processing when film formation is performed and has a structure in which spherical crystals (spherocrystals) of approximately 10 to 100 $\mu$m configured by randomly folded polyethylene molecular chains are connected by non-crystalline molecules. The non-oriented polyethylene film has properties that when large impact is applied, the spherocrystals are broken, and the molecular chains are orientated and stretched, whereby breakage of the film itself can be prevented. Hence, a packaging body (configured by preparing a packaging bag, filling contents therein, and sealing it) prepared from a laminated body in which non-oriented polyethylene films are laminated as the intermediate layer 20 and the sealant layer 30 has characteristics such that the bag has superior drop strength.

The tensile elastic modulus of the intermediate layer in the machine direction (MD) may be lower than 800 MPa at 23 °C.

If the tensile elastic modulus in the machine direction (MD) of the intermediate layer is lower than 800 MPa at 23 °C, stress due to external impact is easily dispersed because the intermediate layer has appropriate softness. From this viewpoint, the tensile elastic modulus is preferably 700 MPa or lower, and more preferably 650 MPa or lower. From the viewpoint that the intermediate layer has appropriate hardness, the lower limit of the tensile elastic modulus can be 300 MPa or higher.

In contrast, the tensile elastic modulus of the intermediate layer in the machine direction (MD) may be 800 to 2000 MPa at 23 °C.

If the tensile elastic modulus in the machine direction (MD) of the intermediate layer is 800 MPa or higher at 23 °C, the intermediate layer is difficult to stretch because the intermediate layer has appropriate hardness. If the tensile elastic modulus is 2000 MPa or lower, stress due to external impact is easily dispersed because the intermediate layer has appropriate softness. From this viewpoint, the tensile elastic modulus is preferably 900 MPa or higher and 1800 MPa or lower, and more preferably 1000 MPa or higher and 1500 MPa or lower.

The tensile elastic modulus of the intermediate layer 20 can be adjusted using various methods as in the substrate layer 10.

As the intermediate layer 20, a film formed of high-density polyethylene (density of 0.94 g/cm$^3$ or higher) can be used. Using the high-density polyethylene film easily meets the above tensile elastic modulus (e.g., the range of the tensile elastic modulus to be used can be adjusted depending on the stretching method or the like). The high-density polyethylene film may be petroleum-derived, plant-derived, or a mixture thereof. As the intermediate layer 20, as in the substrate layer 10, a non-oriented polyethylene film having a multilayer structure produced by extruding polyethylene having different densities using a coextrusion method, or the like can be used.

The thickness of the intermediate layer 20 is preferably 9 $\mu$m or more and 50 $\mu$m or less, more preferably 12 $\mu$m or more and 35 $\mu$m or less, and still more preferably 12 $\mu$m or more and 30 $\mu$m or less. When the thickness of the intermediate layer 20 is 9 $\mu$m or more, strength and heat resistance of the laminated body can be improved. When the thickness of the intermediate layer 20 is 50 $\mu$m or less, processability of the laminated body can be improved.

The intermediate layer 20 can be prepared by forming a polyethylene film using a T-die method or an inflation method. When the intermediate layer 20 is prepared using the T-die method, the melt flow rate (MFR) of polyethylene is preferably 3 g/10 minutes or higher and 20 g/10 minutes or lower. If the MFR is set to 3 g/10 minutes or higher, processability of the laminated body can be improved. In addition, if the MFR is set to 20 g/10 minutes or lower, breakage of the prepared film can be prevented.

When the intermediate layer 20 is prepared using the inflation method, the MFR of polyethylene is preferably 0.5 g/10 minutes or higher and 5 g/10 minutes or lower. If the MFR is set to 0.5 g/10 minutes or higher, processability of the laminated body can be improved. In addition, if the MFR is set to 5 g/10 minutes or lower, film formation quality can be improved.

The haze of the polyethylene film configuring the intermediate layer 20 is preferably 3% or higher, and more preferably 5% or higher, from the viewpoint that as a degree of orientation is higher, the haze is lower and the elastic modulus is higher. The haze is preferably 30% or lower, and more preferably 20% or lower, from the viewpoint that as the degree of orientation is lower, the haze is higher and the elastic modulus is lower, and from the viewpoint of ensuring visibility.

(Deposition layer)

Regarding the deposition layer, the description of the first laminated body should be referred to.

(Gas barrier coating layer)

Regarding the gas barrier coating layer, the description of the first laminated body should be referred to.

(Sealant layer)

Regarding the sealant layer, the description of the first laminated body should be referred to.
The tensile elastic modulus of the sealant layer 30 can be adjusted using various methods as in the substrate layer 10.

(Adhesive layer)

Regarding the adhesive layer, the description of the first laminated body should be referred to.

<Packaging material>

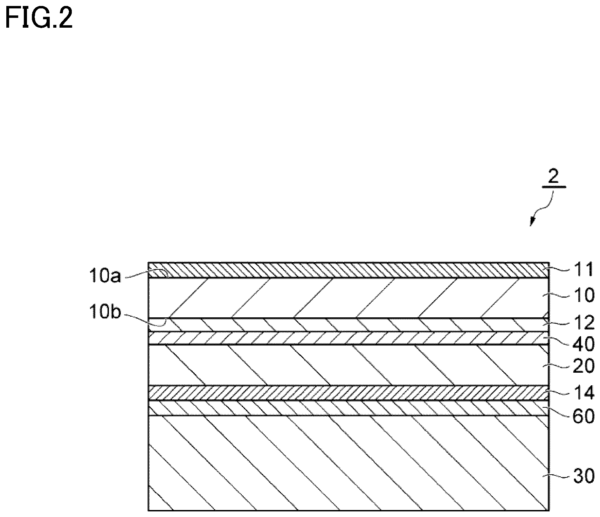

In a state in which one laminated body 1 is folded while the sealant layer 30 is opposed to itself, or two laminated bodies 1 overlap each other while the sealant layers 30 are opposed to each other, joining the sealant layer 30 of a peripheral edge by heat sealing while a filling part of the contents is kept therein can form a packaging material (packaging bag) configured by the laminated body 1. Performing the above joining while a folded bottom film is interposed, a standing pouch can be formed as the packaging material. In addition, the packaging material can be used as various packaging bags such as a pillow packaging bag, a four-side sealed bag, a three-side sealed bag, and a gusset bag. As described above, the laminated body 1 can be applied to various packaging materials.
<Packaging body>
The packaging body includes the above packaging material and contents accommodated in the packaging material. One produced by preparing a packaging bag from the above laminated body, filling the packaging bag with contents, and sealing the packaging bag is resistant to external impact and is unlikely to undergo leakage of the contents. Examples of such contents include foods such as liquid seasoning, drinks, and jellies and non-foods such as detergent, shampoo, conditioner, lotion, milky lotion, and sterilizing liquid.
Hereinbefore, a preferred embodiment of the present invention has been described. However, the present invention is not limited to the above embodiment. For example, the laminated body may not include one or more of the printed layer, the intermediate layer, the deposition layer, and the gas barrier coating layer. When the laminated body does not include the intermediate layer, the second adhesive layer is not required, and the deposition layer may be provided on the substrate layer. In addition, when the laminated body does not include the gas barrier coating layer, the laminated body may be one illustrated in FIG. 2.
A laminated body 2 illustrated in FIG. 2 is obtained by excluding the gas barrier coating layer 15 from the laminated body 1. The laminated body 2 includes, instead of the gas barrier coating layer 15, a third adhesive layer 60 formed using an adhesive agent that can produce gas barrier properties after being cured (gas barrier adhesive described above). Hence, the gas barrier properties can be suppressed from being lowered due to occurrence of cracking in the deposition layer 14.

Examples

Hereinafter, the present invention will be described by examples in further detail. However, the present invention is not limited to the examples.

<Experiment 1: First laminated body>

(Preparation of substrate layer)

Physical properties of substrate layers used in respective examples are collectively illustrated in table 1. It is noted that the layer configuration of the examples (the order of lamination) is illustrated in table 1.

(Preparation of anchor coat agent)

Acrylic polyol and tolylene diisocyanate were mixed so that the number of NCO groups of the tolylene diisocyanate was equivalent to the number of OH groups of the acrylic polyol, and the mixture was diluted with ethyl acetate so that the total solid (total amount of acrylic polyol and tolylene diisocyanate) was 5 mass%. To the mixed liquid after the dilution, β-(3, 4 epoxy cyclohexyl) trimethoxysilane was further added so as to be 5 mass% with respect to the total amount of acrylic polyol and tolylene diisocyanate at 100 mass%, and these were mixed, whereby an anchor coat agent was prepared.

(Preparation of overcoat agent)

The following liquid A, liquid B, and liquid C were mixed at a mass ratio of 70/20/10, respectively, to prepare an overcoat agent.

Liquid A: A hydrolyzed solution of solid content at 5 mass% ($SiO_2$ equivalent) obtained by adding 72.1 g of 0.1N hydrochloric acid to 17.9 g of tetraethoxysilane [$Si(OC_2H_5)_4$] and 10 g of methanol and stirring for 30 minutes to undergo hydrolysis.
Liquid B: A water/methanol solution at 5 mass% of polyvinyl alcohol (mass ratio of water : methanol was 95 : 5)
Liquid C: A hydrolyzed solution obtained by diluting 1, 3, 5-tris (3-trialkoxysilylpropyl) isocyanurate with a mixed liquid of water/isopropyl alcohol (mass ratio of water : isopropyl alcohol was 1 : 1) so that the total solid was 5 mass%.

(Preparation of intermediate film A)

As the intermediate layer, a non-oriented polyethylene film was prepared both surfaces of which had been subjected to corona treatment and which had a thickness of 32 μm (a film having five layers formed using an inflation method, mean density of 0.950 g/cm³). Physical properties of the intermediate layers used in respective examples are collectively illustrated in table 1.

(Preparation of intermediate film B)

One surface of the intermediate film A was coated with the anchor coat agent described above using a gravure coating method and was dried to provide an anchor coat layer having a thickness of 0.1 μm. Next, a transparent deposition layer formed of silicon oxide and having a thickness of 50 nm was formed on the anchor coat layer by using vacuum deposition equipment using an electron beam heating method. The O/Si ratio of the deposition layer was set to 1.8 by adjusting the type of deposition material. The deposition layer was coated with the overcoat agent described above using a gravure coating method and was dried to provide a gas barrier coating layer (overcoat layer) having a gas barrier function with a thickness of 0.3 μm. Thus, an intermediate film B having the deposition layer formed of silicon oxide was obtained.

(Preparation of intermediate film C)

An intermediate film C was obtained as in the intermediate film B except that the gas barrier coating layer was not formed.

(Preparation of intermediate film D)

As the intermediate layer, a biaxially-oriented polyethylene film both surfaces of which had been subjected to corona treatment and which had a thickness of 25 μm (HDPE film including PP layers at the both surfaces thereof, content ratio of PE was 88 mass%, and PE layer thickness ratio was 88 %) was prepared. Using this, an intermediate film D was obtained having the deposition layer formed of silicon oxide as in the intermediate film B.

(Preparation of application liquid for forming protective layer)

As an application liquid for forming a protective layer formed of polyurethane, an application liquid was prepared by mixing TAKELAC W-5030 (produced by Mitsui Chemicals, Inc.) and TAKENATE WD-725 (produced by Mitsui Chemicals, Inc.) as a curing agent at a mass ratio of 9:1 and diluting the mixture with a solvent (water / 2-propanol(IPA) = 9:1(mass ratio)) so that the nonvolatile component was 5 mass%.

(Preparation of solventless adhesive)

100 parts by mass of DICDRY 2K-SF-220A produced by DIC Graphics Corporation was mixed with 85 parts by mass of DICDRY HA-233B produced by DIC Graphics Corporation with heating at 40 °C, to prepare a solventless adhesive.

(Preparation of solvent adhesive A)

100 parts by mass of TAKELAC A525 produced by Mitsui Chemicals, Inc. was mixed with 11 parts by mass of TAKENATE A52 produced by Mitsui Chemicals, Inc. and 84 parts by mass of ethyl acetate to prepare a solvent adhesive A, which is a urethane-based adhesive.

(Preparation of solvent adhesive B (gas barrier adhesive))

23 parts by mass of a solvent obtained by mixing ethyl acetate and methanol at a mass ratio of 1:1 was mixed with 16 parts by mass of MAXIVE C93T produced by MITSUBISHI GAS CHEMICAL COMPANY, INC. and 5 parts by mass of MAXIVE M-100 produced by MITSUBISHI GAS CHEMICAL COMPANY, INC. to prepare a solvent adhesive B, which is a gas barrier adhesive.

(Example 1)

As a substrate layer, a biaxially-oriented polyethylene film one surface of which had been subjected to corona treatment and which had a thickness of 25 $\mu$m (HDPE film including PP layers at both surfaces thereof, content ratio of PE was 88 mass%, and PE layer thickness ratio was 88 %) was prepared. On the surface subjected to the corona treatment on the inner surface side of the substrate layer, a printed layer (thickness of 1 $\mu$m) was formed using a gravure printing method using urethane-based ink.
Next, the surface of the substrate layer on which the printed layer was formed and the sealant layer were subjected to adhesion to each other using a dry lamination method using the solventless adhesive. The adhesive layer was set as a first adhesive layer. The thickness of the first adhesive layer was 1.8 $\mu$m.
As the sealant layer, a single-surface corona-treated non-oriented polyethylene film (LLDPE) having a thickness of 120 $\mu$m was prepared. Thus, a laminated body was obtained.

(Example 2)

As a substrate layer, a biaxially-oriented polyethylene film one surface of which had been subjected to corona treatment and which had a thickness of 25 $\mu$m (HDPE film including PP layers at both surfaces thereof, content ratio of PE was 88 mass%, and PE layer thickness ratio was 88 %) was prepared. On the surface subjected to corona treatment on the inner surface side of the substrate layer, a printed layer (thickness of 1 $\mu$m) was formed using a gravure printing method using urethane-based ink.
Next, the surface of the substrate layer on which the printed layer was formed and the intermediate film A were subjected to adhesion to each other using a dry lamination method using the solventless adhesive. The adhesive layer was set as a first adhesive layer. The thickness of the first adhesive layer was 1.8 $\mu$m.
As the sealant layer, a single-surface corona-treated non-oriented polyethylene film (LLDPE) having a thickness of 120 $\mu$m was prepared. The intermediate film A and a corona treated surface of the sealant layer were joined to each other using a dry lamination method using the solvent adhesive A as a second adhesive layer. The thickness of the second adhesive layer was 2.1 $\mu$m. Thus, a laminated body was obtained.

(Example 3)

A laminated body was obtained as in example 2 except that the intermediate film B was used instead of the intermediate film A.

(Example 4)

A laminated body was obtained as in example 3 except that the intermediate film C was used instead of the intermediate film B and the solvent adhesive B, which is a gas barrier adhesive, was used instead of the solvent adhesive A.

(Example 5)

A laminated body was obtained as in example 2 except that the intermediate film D was used instead of the intermediate film B.

(Example 6)

On the surface subjected to the corona treatment on the outer surface side of the substrate layer, the application liquid for forming the protective layer described above was applied using a gravure coating method, and dried and cured, to form a protective layer having a thickness of 0.5 $\mu$m. A laminated body was obtained as in example 4 except for the above.

(Comparative example 1)

As a substrate layer, a uniaxially-oriented polyethylene film one surface of which had been subjected to corona treatment and which had a thickness of 25 $\mu$m (SMKUQ produced by TOKYO PRINTING INK MFG. CO., LTD., thickness of 25 $\mu$m, density of 0.950 g/cm$^3$) was prepared. A laminated body was obtained as in example 1 except for the above.

(Comparative example 2)

As a substrate layer, a non-oriented polyethylene film one surface of which had been subjected to corona treatment and which had a thickness of 30 $\mu$m (HS31 produced by TAMAPOLY CO., LTD., thickness of 30 $\mu$m, density of 0.94 g/cm$^3$) was prepared. A laminated body was obtained as in example 1 except for the above.

(Comparative example 3)

As a substrate layer, a uniaxially-oriented polyethylene film one surface of which had been subjected to corona treatment and which had a thickness of 25 $\mu$m (SMKUQ produced by TOKYO PRINTING INK MFG. CO., LTD., thickness of 25 $\mu$m, density of 0.950 g/cm$^3$) was prepared. A laminated body was obtained as in example 2 except for the above.

(Comparative example 4)

As a substrate layer, a non-oriented polyethylene film one surface of which had been subjected to corona treatment and which had a thickness of 30 $\mu$m (HS31 produced by TAMAPOLY CO., LTD., thickness of 30 $\mu$m, density of 0.94 g/cm$^3$) was prepared. A laminated body was obtained as in example 2 except for the above.

<Experiment 1: Evaluation>

For the laminated bodies of the respective examples, the following evaluations were performed. The results were illustrated in table 1.

(Recyclability)

Based on the above expression (1), the percentage of polyethylene in each of the laminated bodies of the examples (mass%) was calculated. In all of the examples, the content ratio of polyethylene was 90 mass% or higher.

(Evaluation of heat resistance)

A sample of 10 cm per side cut out from the laminated body was folded over so that the sealant layer was located on the inside. Next, the lower surface seal temperature of a heat seal tester was set to 30 °C, and the upper surface seal temperature thereof was set to 170 °C. Then, 0.2 MPa of pressure was applied to the folded-over sample for one minute. Then, it was observed whether the component of the upper surface of the folded-over sample had adhered to a heat seal bar in an area in contact with the heat seal bar, and heat resistance was evaluated based on the following criteria.

A: The component of the upper surface of the sample did not adhere to the heat seal bar.
B: The component of the upper surface of the sample adhered to the heat seal bar.

(Evaluation of visibility)

A pattern displayed by the printed layer was visually observed from the substrate layer side, and visibility was evaluated based on the following criteria.

A: The pattern displayed by the printed layer was clearly recognized.
B: The pattern displayed by the printed layer was blurred and not clear.

(Evaluation of gas barrier properties)

For the laminated body, an oxygen transmission rate (OTR) was measured at 30 °C and a relative humidity of 70 %. This measurement was performed in conformity with JIS K-7126, method B. Then, the oxygen transmission rate was referred to the following criteria to evaluate gas barrier properties.

A: The OTR was lower than 10 cc/m$^2$·day·atm.
B: The OTR was 10 cc/m$^2$·day·atm or higher.

(Adhesion)

A strip specimen having a width of 15 mm was cut out from the laminated body of each of the examples, and peel strength between the substrate layer and the intermediate layer or the sealant layer was measured using a TENSILON universal testing instrument RTC-1250 produced by ORIENTEC CO., LTD. in conformity with JIS Z 1707. This measurement was performed using T-type peeling under normal conditions (Dry).

A: The peel strength was 2 N/15mm or higher.
B: The peel strength was lower than 2 N/15mm.

(Evaluation of puncture strength)

A part of the laminated body of each of the examples having an appropriate size was cut out, and puncture strength of the laminated body was measured using a TENSILON universal testing instrument RTC-1250 produced by ORIENTEC CO., LTD. in conformity with JIS Z 1707.

(Dart impact test)

A part of the laminated body of each of the examples having a size of 200 mm * 300 mm was cut out, and tests were performed using a Dart Impact Tester IM-302 produced by TESTER SANGYO CO,.LTD. in conformity with JIS K 7124-1 Method A and in accordance with a staircase method to measure and calculate impact failure mass (g).

(Drop test)

A self-standing packaging bag having a height of 240 mm, a width of 160 nm, and a bottom fold of 40 nm was prepared using the laminated body of each of the examples. 800 mL of water was enclosed in the packaging bag, and the bag was dropped from a location at a height of 120 cm ten times, and whether the bag was broken was checked. Then, evaluation was performed based on the following criterion.

Good: The bag was not broken even though it was dropped ten times.
Poor: The bag was broken before it was dropped ten times. (The number in a parenthesis indicates the number of drops when the bag was broken.)

[Table 1]

| Experiment 1 | Layer configuration | Example 1 | Example 2 | Example 3 | Example 4 | Example 5 | Example 6 | Comparative example 1 | Comparative example 2 | Comparative example 3 | Comparative example 4 |
|---|---|---|---|---|---|---|---|---|---|---|---|
| | Protective layer | - | - | - | - | - | Present | - | - | - | - |
| Substrate layer | Presence or absence of stretch | Biaxial ly-oriented | Biaxial ly-oriented | Biaxial ly-oriented | Biaxiall y-oriented | Biaxial ly-oriented | Biaxiall y-oriented | Uniaxiall y-oriented | Non-oriented | Uniaxiall y-oriented | Non-oriented |
| | Density (g/cm³) | 0.95 | 0.95 | 0.95 | 0.95 | 0.95 | 0.95 | 0.95 | 0.94 | 0.95 | 0.94 |
| | Thickness (μm) | 25 | 25 | 25 | 25 | 25 | 25 | 25 | 30 | 25 | 30 |
| | TMA elongation rate @70°C | 1.2 | 1.2 | 1.2 | 1.2 | 1.2 | 1.2 | 0.4 | 3.3 | 0.4 | 3.3 |
| | TMA elongation rate @90°C | 2.8 | 2.8 | 2.8 | 2.8 | 2.8 | 2.8 | 0.3 | 5.9 | 0.3 | 5.9 |
| | Haze (%) | 6.7 | 6.7 | 6.7 | 6.7 | 6.7 | 6.7 | 2.4 | 29.3 | 2.4 | 29.3 |
| Printed layer | | Present | Present | Present | Present | Present | Present | Present | Present | Present | Present |
| First adhesive layer | Material | Uretha ne-based NS adhesive | Uretha ne-based NS adhesive | Uretha ne-based NS adhesive | Urethan e-based NS adhesive | Uretha ne-based NS adhesive | Urethan e-based NS adhesive | Urethane-based NS adhesive | Urethane-based NS adhesive | Urethane-based NS adhesive | Urethane-based NS adhesive |
| | Thickness (μm) | 1.8 | 1.8 | 1.8 | 1.8 | 1.8 | 1.8 | 1.8 | 1.8 | 1.8 | 1.8 |

(continued)

| Experiment 1 | | | Example 1 | Example 2 | Example 3 | Example 4 | Example 5 | Example 6 | Comparative example 1 | Comparative example 2 | Comparative example 3 | Comparative example 4 |
|---|---|---|---|---|---|---|---|---|---|---|---|---|
| Layer configuration | | Protective layer | - | - | - | - | - | Present | - | - | - | - |
| | | Presence or absence of stretch | - | Non-oriented | Non-oriented | Non-oriented | Biaxially-oriented | Non-oriented | - | - | Non-oriented | Non-oriented |
| | Intermediate layer | Density (g/cm³) | - | 0.95 | 0.95 | 0.95 | 0.95 | 0.95 | - | - | 0.95 | 0.95 |
| | | Thickness (µm) | - | 32 | 32 | 32 | 25 | 32 | - | - | 32 | 32 |
| | | TMA elongation rate @70°C | - | 3.0 | 3.0 | 3.0 | 1.2 | 3.0 | - | - | 3.0 | 3.0 |
| | | TMA elongation rate @90°C | - | 5.0 | 5.0 | 5.0 | 2.8 | 5.0 | - | - | 5.0 | 5.0 |
| | | Haze (%) | - | 20.8 | 20.8 | 20.8 | 6.7 | 20.8 | - | - | 20.8 | 20.8 |
| | Deposition layer | Material | - | - | Silicon oxide | Silicon oxide | Silicon oxide | Silicon oxide | - | - | - | - |
| | | Thickness (nm) | - | - | 50 | 50 | 50 | 50 | - | - | - | - |
| | Gas barrier coating layer | | - | - | Present | - | Present | - | - | - | - | - |
| | Second adhesive layer | Material | - | Urethane-based adhesive | Urethane-based adhesive | Polyamine-based gas barrier adhesive | Urethane-based adhesive | Polyamine-based gas barrier adhesive | - | - | Urethane-based adhesive | Urethane-based adhesive |
| | | Thickness (µm) | - | 2.1 | 2.1 | 2.1 | 2.1 | 2.1 | - | - | 2.1 | 2.1 |
| | Sealant layer | Thickness (µm) | 120 | 120 | 120 | 120 | 120 | 120 | 120 | 120 | 120 | 120 |

(continued)

| Experiment 1 | Layer configuration | Example 1 | Example 2 | Example 3 | Example 4 | Example 5 | Example 6 | Comparative example 1 | Comparative example 2 | Comparative example 3 | Comparative example 4 |
|---|---|---|---|---|---|---|---|---|---|---|---|
| | Protective layer | - | - | - | - | - | Present | - | - | - | - |
| Evaluation | Heat resis-tance (170°C) | A | A | A | A | A | A | A | A | A | A |
| | Visibility | A | A | A | A | A | A | A | B | A | B |
| | Gas barrier properties | B | B | A | A | A | A | B | B | B | B |
| | Adhesion | A | A | A | A | A | A | B | A | B | A |
| | Puncture Strength (N) | 10 | 12 | 12 | 12 | 12 | 12 | 9 | 4 | 11 | 6 |
| | Dart impact test (g) | 800 | 900 | 900 | 900 | 900 | 900 | 300 | 250 | 400 | 350 |
| | Drop test | Good | Good | Good | Good | Good | Good | Poor (3) | Poor (6) | Poor (4) | Poor (8) |

As illustrated in table 1, according to experiment 1, although all the examples and comparative examples had high recyclability, impact resistance was sufficient in the examples in which the substrate layer had a predetermined MD direction elongation rate, and impact resistance was insufficient in the comparative examples in which the substrate layer did not have the predetermined MD direction elongation rate.

<Experiment 2: Second laminated body>

(Preparation of substrate layer)

Physical properties of substrate layers used in respective example are collectively illustrated in table 2. It should be noted that the layer configuration of the examples (the order of lamination) is illustrated in table 2.

(Preparation of anchor coat agent)

Acrylic polyol and tolylene diisocyanate were mixed so that the number of NCO groups of the tolylene diisocyanate was equivalent to the number of OH groups of the acrylic polyol, and the mixture was diluted with ethyl acetate so that the total solid (total amount of acrylic polyol and tolylene diisocyanate) was 5 mass%. To the mixture liquid after the dilution, $\beta$-(3, 4 epoxy cyclohexyl) trimethoxysilane was further added so as to be 5 mass% with respect to the total amount of acrylic polyol and tolylene diisocyanate at 100 mass%, and these were mixed, whereby an anchor coat agent was prepared.

(Preparation of overcoat agent)

The following liquid A, liquid B, and liquid C were mixed at a mass ratio of 70/20/10, respectively, to prepare an overcoat agent.

Liquid A: A hydrolyzed solution of solid content at 5 mass% ($SiO_2$ equivalent) obtained by adding 72.1 g of 0.1N hydrochloric acid to 17.9 g of tetraethoxysilane [$Si(OC_2H_5)_4$] and 10 g of methanol and stirring for 30 minutes to undergo hydrolysis.
Liquid B: A water/methanol solution at 5 mass% of polyvinyl alcohol (mass ratio of water : methanol was 95 : 5)
Liquid C: A hydrolyzed solution obtained by diluting 1, 3, 5-tris (3-trialkoxysilylpropyl) isocyanurate with a mixed liquid of water/isopropyl alcohol (mass ratio of water : isopropyl alcohol was 1 : 1) so that the total solid was 5 mass%.

(Preparation of intermediate film A)

As the intermediate layer, a non-oriented polyethylene film was prepared both surfaces of which had been subjected to corona treatment and which had a thickness of 32 $\mu$m (a film having five layers formed using an inflation method, mean density of 0.950 g/cm$^3$). Physical properties of the intermediate layers used in respective examples are collectively illustrated in table 2.

(Preparation of intermediate film B)

One surface of the intermediate film A was coated with the anchor coat agent described above using a gravure coating method and was dried to provide an anchor coat layer having a thickness of 0.1 $\mu$m. Next, a transparent deposition layer formed of silicon oxide and having a thickness of 50 nm was formed on the anchor coat layer by using vacuum deposition equipment using an electron beam heating method. The O/Si ratio of the deposition layer was set to 1.8 by adjusting the type of deposition material. The deposition layer was coated with the overcoat agent described above using a gravure coating method and was dried to provide a gas barrier coating layer (overcoat layer) having a gas barrier function with a thickness of 0.3 $\mu$m. Thus, an intermediate film B having the deposition layer formed of silicon oxide was obtained.

(Preparation of intermediate film C)

An intermediate film C was obtained as in the intermediate film B except that the gas barrier coating layer was not formed.

(Preparation of application liquid for forming protective layer)

As an application liquid for forming a protective layer formed of polyurethane, an application liquid was prepared by mixing TAKELAC W-5030 (produced by Mitsui Chemicals, Inc.) and TAKENATE WD-725 (produced by Mitsui Chemicals, Inc.) as a curing agent at a mass ratio of 9:1 and diluting the mixture with a solvent (water / 2-propanol(IPA) = 9:1(mass ratio)) so that the nonvolatile component was 5 mass%.

(Preparation of solventless adhesive)

100 parts by mass of DICDRY 2K-SF-220A produced by DIC Graphics Corporation was mixed with 85 parts by mass of DICDRY HA-233B produced by DIC Graphics Corporation with heating at 40 °C, to prepare a solventless adhesive.

(Preparation of solvent adhesive A)

100 parts by mass of TAKELAC A525 produced by Mitsui Chemicals, Inc. was mixed with 11 parts by mass of TAKENATE A52 produced by Mitsui Chemicals, Inc. and 84 parts by mass of ethyl acetate to prepare a solvent adhesive A, which is a urethane-based adhesive.

(Preparation of solvent adhesive B (gas barrier adhesive))

23 parts by mass of a solvent obtained by mixing ethyl acetate and methanol at a mass ratio of 1:1 was mixed with 16 parts by mass of MAXIVE C93T produced by MITSUBISHI GAS CHEMICAL COMPANY, INC. and 5 parts by mass of MAXIVE M-100 produced by MITSUBISHI GAS CHEMICAL COMPANY, INC. to prepare a solvent adhesive B, which is a gas barrier adhesive.

(Example 1)

As a substrate layer, a biaxially-oriented polyethylene film one surface of which had been subjected to corona treatment and which had a thickness of 25 $\mu$m (HDPE film including PP layers at both surfaces thereof, content ratio of PE was 88 mass%, and PE layer thickness ratio was 88 %) was prepared. On the surface subjected to the corona treatment on the inner surface side of the substrate layer, a printed layer (thickness of 1 $\mu$m) was formed using a gravure printing method using urethane-based ink.
Next, the surface of the substrate layer on which the printed layer was formed and the sealant layer were subjected to adhesion to each other using a dry lamination method method using the solventless adhesive. The adhesive layer was set as a first adhesive layer. The thickness of the first adhesive layer was 1.8 $\mu$m.
As the sealant layer, a single-surface corona-treated non-oriented polyethylene film (LLDPE) having a thickness of 120 $\mu$m was prepared. Thus, a laminated body was obtained.

(Example 2)

As a substrate layer, a biaxially-oriented polyethylene film one surface of which had been subjected to corona treatment and which had a thickness of 25 $\mu$m (HDPE film including PP layers at both surfaces thereof, content ratio of PE was 88 mass%, and PE layer thickness ratio was 88 %) was prepared. On the surface subjected to corona treatment on the inner surface side of the substrate layer, a printed layer (thickness of 1 $\mu$m) was formed using a gravure printing method using urethane-based ink.
Next, the surface of the substrate layer on which the printed layer was formed and the intermediate film A were subjected to adhesion to each other using a dry lamination method using the solventless adhesive. The adhesive layer was set as a first adhesive layer. The thickness of the first adhesive layer was 1.8 $\mu$m.
As the sealant layer, a single-surface corona-treated non-oriented polyethylene film (LLDPE) having a thickness of 120 $\mu$m was prepared. The intermediate film A and a corona treated surface of the sealant layer were joined to each other using a dry lamination method using the solvent adhesive A as a second adhesive layer. The thickness of the second adhesive layer was 2.1 $\mu$m. Thus, a laminated body was obtained.

(Example 3)

A laminated body was obtained as in example 2 except that the intermediate film B was used instead of the intermediate film A.

(Example 4)

A laminated body was obtained as in example 3 except that the intermediate film C was used instead of the intermediate film B and the solvent adhesive B, which is a gas barrier adhesive, was used instead of the solvent adhesive A.

(Example 5)

On the surface subjected to the corona treatment on the outer surface side of the substrate layer, the application liquid for forming the protective layer described above was applied using a gravure coating method, and dried and cured, to form a protective layer having a thickness of 0.5 $\mu$m. A laminated body was obtained as in example 4 except for the above.

(Comparative example 1)

As a substrate layer, a uniaxially-oriented polyethylene film one surface of which had been subjected to corona treatment and which had a thickness of 25 $\mu$m (SMKUQ produced by TOKYO PRINTING INK MFG. CO., LTD., thickness of 25 $\mu$m, density of 0.950 g/cm$^3$) was prepared. A laminated body was obtained as in example 1 except for the above.

(Comparative example 2)

As a substrate layer, a non-oriented polyethylene film one surface of which had been subjected to corona treatment and which had a thickness of 30 $\mu$m (HS31 produced by TAMAPOLY CO., LTD., thickness of 30 $\mu$m, density of 0.94 g/cm$^3$) was prepared. A laminated body was obtained as in example 1 except for the above.

(Comparative example 3)

As a substrate layer, a uniaxially-oriented polyethylene film one surface of which had been subjected to corona treatment and which had a thickness of 25 $\mu$m (SMKUQ produced by TOKYO PRINTING INK MFG. CO., LTD., thickness of 25 $\mu$m, density of 0.950 g/cm$^3$) was prepared. A laminated body was obtained as in example 2 except for the above.

(Comparative example 4)

As a substrate layer, a non-oriented polyethylene film one surface of which had been subjected to corona treatment and which had a thickness of 30 $\mu$m (HS31 produced by TAMAPOLY CO., LTD., thickness of 30 $\mu$m, density of 0.94 g/cm$^3$) was prepared. A laminated body was obtained as in example 2 except for the above.

<Experiment 2: Evaluation>

For the laminated bodies of the respective examples, the following evaluations were performed. The results were illustrated in table 2.

(Recyclability)

Based on the above expression (1), the percentage of polyethylene in each of the laminated bodies of the examples (mass%) was calculated. In all of the examples, the content ratio of polyethylene was 90 mass% or higher.

(Difference between tensile elastic moduli)

When the substrate layer and the sealant layer were laminated via the first adhesive layer, a difference between a tensile elastic modulus of the substrate layer in the machine direction (MD) and a tensile elastic modulus of the sealant layer in the machine direction (MD) (the tensile elastic modulus of the substrate layer - the tensile elastic modulus of the sealant layer) was calculated. When the substrate layer and the intermediate layer were laminated via the first adhesive layer, a difference between a tensile elastic modulus of the substrate layer in the machine direction (MD) and a tensile elastic modulus of the intermediate layer in the machine direction (MD) (the tensile elastic modulus of the substrate layer - the tensile elastic modulus of the intermediate layer) was calculated.

(Evaluation of heat resistance)

A sample of 10 cm per side cut out from the laminated body was folded over so that the sealant layer was located on the inside. Next, the lower surface seal temperature of a heat seal tester was set to 30 °C, and the upper surface seal temperature thereof was set to 170 °C. Then, 0.2 MPa of pressure was applied to the folded-over sample for one minute. Then, it was observed whether the component of the upper surface of the folded-over sample had adhered to a heat seal bar in an area in contact with the heat seal bar, and heat resistance was evaluated based on the following criteria.

A: The component of the upper surface of the sample did not adhere to the heat seal bar.
B: The component of the upper surface of the sample adhered to the heat seal bar.

(Evaluation of visibility)

A pattern displayed by the printed layer was visually observed from the substrate layer side, and visibility was evaluated based on the following criteria.

A: The pattern displayed by the printed layer was clearly recognized.
B: The pattern displayed by the printed layer was blurred and not clear.

(Evaluation of gas barrier properties)

For the laminated body, an oxygen transmission rate (OTR) was measured at 30 °C and a relative humidity of 70 %. This measurement was performed in conformity with JIS K-7126, method B. Then, the oxygen transmission rate was referred to the following criteria to evaluate gas barrier properties.

A: The OTR was lower than 10 cc/m$^2$·day·atm.
B: The OTR was 10 cc/m$^2$·day·atm or higher.

(Adhesion)

A strip specimen having a width of 15 mm was cut out from the laminated body of each of the examples, and peel strength between the substrate layer and the intermediate layer or the sealant layer was measured using a TENSILON universal testing instrument RTC-1250 produced by ORIENTEC CO., LTD. in conformity with JIS Z 1707. This measurement was performed using T-type peeling under normal conditions (Dry).

A: The peel strength was 2 N/15mm or higher.
B: The peel strength was lower than 2 N/15mm.

(Evaluation of puncture strength)

A part of the laminated body of each of the examples having an appropriate size was cut out, and puncture strength of the laminated body was measured using a TENSILON universal testing instrument RTC-1250 produced by ORIENTEC CO., LTD. in conformity with JIS Z 1707.

(Dart impact test)

A part of the laminated body of each of the examples having a size of 200 mm * 300 mm was cut out, and tests were performed using a Dart Impact Tester IM-302 produced by TESTER SANGYO CO,.LTD. in conformity with JIS K 7124-1 Method A and in accordance with a staircase method to measure and calculate impact failure mass (g).

(Gelbo flex test (GF test))

The laminated body of each of the examples was bent 1500 times at room temperature (23 °C) using a Gelbo flex tester (a repeated local bending fatigue tester that evaluates pinhole resistance of a plastic film) produced by TESTER SANGYO CO,.LTD. The bent laminated body was pasted on a mount, a liquid pinhole checker was applied to the laminated body, and leakage of the checker to the mount was examined to count the number of pinholes.

A: The number of pinholes was 10 or less.

B: The number of pinholes was 11 or more.

(Drop test)

A self-standing packaging bag having a height of 240 mm, a width of 160 nm, and a bottom fold of 40 nm was prepared using the laminated body of each of the examples. 800 mL of water was enclosed in the packaging bag, and the bag was dropped from a location at a height of 120 cm ten times, and whether the bag was broken was checked. Then, evaluation was performed based on the following criterion.

Good: The bag was not broken even though it was dropped ten times.
Poor: The bag was broken before it was dropped ten times. (The number in a parenthesis indicates the number of drops when the bag was broken.)

[Table 2]

| Experiment 2 | Layer configuration | Example 1 | Example 2 | Example 3 | Example 4 | Example 5 | Comparative example 1 | Comparative example 2 | Comparative example 3 | Comparative example 4 |
|---|---|---|---|---|---|---|---|---|---|---|
| | Protective layer | - | - | - | - | Present | - | - | - | - |
| Substrate layer | Presence or absence of stretch | Biaxiall y-oriented | Biaxiall y-oriented | Biaxiall y-oriented | Biaxially -oriented | Biaxially -oriented | Uniaxially -oriented | Non-oriented | Uniaxially -oriented | Non-oriented |
| | Density (g/cm³) | 0.95 | 0.95 | 0.95 | 0.95 | 0.95 | 0.95 | 0.94 | 0.95 | 0.94 |
| | Thickness(μm) | 25 | 25 | 25 | 25 | 25 | 25 | 30 | 25 | 30 |
| | MD tensile elastic modulus (MPa) | 1434 | 1434 | 1434 | 1434 | 1434 | 2343 | 548 | 2343 | 548 |
| | Haze (%) | 6.7 | 6.7 | 6.7 | 6.7 | 6.7 | 2.4 | 29.3 | 2.4 | 29.3 |
| Printed layer | | Present | Present | Present | Present | Present | Present | Present | Present | Present |
| First adhesive layer | Material | Urethan e-based NS adhesive | Urethan e-based NS adhesive | Urethan e-based NS adhesive | Urethane -based NS adhesive | Urethane -based NS adhesive | Urethane-based NS adhesive | Urethane-based NS adhesive | Urethane-based NS adhesive | Urethane-based NS adhesive |
| | Thickness(μm) | 1.8 | 1.8 | 1.8 | 1.8 | 1.8 | 1.8 | 1.8 | 1.8 | 1.8 |
| Intermediate layer | Presence or absence of stretch | - | Non-oriented | Non-oriented | Non-oriented | Non-oriented | - | - | Non-oriented | Non-oriented |
| | Density (g/cm³) | - | 0.95 | 0.95 | 0.95 | 0.95 | - | - | 0.95 | 0.95 |
| | Thickness(μm) | - | 32 | 32 | 32 | 32 | - | - | 32 | 32 |
| | MD tensile elastic modulus (MPa) | - | 628.0 | 628.0 | 628.0 | 628.0 | - | - | 628.0 | 628.0 |
| | Haze | - | 20.8 | 20.8 | 20.8 | 20.8 | - | - | 20.8 | 20.8 |
| Deposition layer | Material | - | - | Silicon oxide | Silicon oxide | Silicon oxide | - | - | - | - |
| | Thickness (nm) | - | - | 50 | 50 | 50 | - | - | - | - |
| Gas barrier coating layer | | - | - | Present | - | - | - | - | - | - |

| Experiment 2 | Layer configuration | Example 1 | Example 2 | Example 3 | Example 4 | Example 5 | Comparative example 1 | Comparative example 2 | Comparative example 3 | Comparative example 4 |
|---|---|---|---|---|---|---|---|---|---|---|
| | Protective layer | - | - | - | - | Present | - | - | - | - |
| Second adhesive layer | Material | - | Urethane-based adhesive | Urethane-based adhesive | Polyamine-based gas barrier adhesive | Polyamine-based gas barrier adhesive | - | - | Urethane-based adhesive | Urethane-based adhesive |
| | Thickness($\mu$ m) | - | 2.1 | 2.1 | 2.1 | 2.1 | - | - | 2.1 | 2.1 |
| Sealant layer | Thickness($\mu$ m) | 120 | 120 | 120 | 120 | 120 | 120 | 120 | 120 | 120 |
| | MD tensile elastic modulus (MPa) | 330 | 330 | 330 | 330 | 330 | 330 | 330 | 330 | 330 |
| Evaluation | Difference between MD tensile elastic moduli (MPa) | 1104 | 806 | 806 | 806 | 806 | 2013 | 218 | 1715 | -80 |
| | Heat resistance (170°C) | A | A | A | A | A | A | A | A | A |
| | Visibility | A | A | A | A | A | A | B | A | B |
| | Gas barrier properties | B | B | A | A | A | B | B | B | B |
| | Adhesion | A | A | A | A | A | B | A | B | A |
| | Puncture strength (N) | 10 | 12 | 12 | 12 | 12 | 9 | 4 | 11 | 6 |
| | GF test (number) | 8 | 8 | 8 | 8 | 8 | 21 | 37 | 21 | 37 |
| | GF test (evaluation) | A | A | A | A | A | B | B | B | B |
| | Dart impact test (g) | 800 | 900 | 900 | 900 | 900 | 300 | 250 | 400 | 350 |
| | Drop test | Good | Good | Good | Good | Good | Poor (3) | Poor (6) | Poor (4) | Poor (8) |

As illustrated in table 2, according to experiment 2, although all the examples and comparative examples had high recyclability, impact resistance was sufficient in the examples in which the substrate layer had a predetermined tensile elastic modulus, and impact resistance was insufficient in the comparative examples in which the substrate layer did not have the predetermined tensile elastic modulus.

[Reference Signs List]

1, 2...laminated body, 10...substrate layer, 10a...substrate layer outer surface, 10b...substrate layer inner surface, 11...protective layer, 12...printed layer, 14...deposition layer, 15...gas barrier coating layer, 20...intermediate layer, 30... sealant layer, 40...first adhesive layer, 50, 60... second adhesive layer

**Claims**

1. A laminated body comprising a structure in which a substrate layer and a sealant layer are laminated in this order, wherein
   the substrate layer and the sealant layer include polyethylene, and
   the substrate layer has machine direction (MD) elongation rates of (i) and (ii):

   (i) an elongation rate of 0.5 to 3.0% when a tension of 50 N/m is applied at 70 °C;
   (ii) an elongation rate of 2.0 to 5.0% when a tension of 50 N/m is applied at 90 °C.

2. The laminated body according to claim 1, further comprising an intermediate layer between the substrate layer and the sealant layer, the intermediate layer including polyethylene.

3. The laminated body according to claim 2, wherein
   the intermediate layer has MD direction elongation rates of (i) and (ii):

   (i) an elongation rate of 0.5 to 3.0% when a tension of 50 N/m is applied at 70 °C;
   (ii) an elongation rate of 2.0 to 5.0% when a tension of 50 N/m is applied at 90 °C.

4. A laminated body comprising a structure in which a substrate layer and a sealant layer are laminated in this order, wherein

   the substrate layer and the sealant layer include polyethylene, and
   a tensile elastic modulus of the substrate layer in a machine direction (MD) is 800 to 2000 MPa at 23 °C.

5. The laminated body according to claim 4, further comprising an intermediate layer between the substrate layer and the sealant layer, the intermediate layer including polyethylene.

6. The laminated body according to claim 5, wherein
   a tensile elastic modulus of the intermediate layer in the machine direction (MD) is lower than 800 MPa at 23 °C.

7. The laminated body according to any one of claims 1 to 6, further comprising a protective layer on a side of the substrate layer opposite to a side facing toward the sealant layer.

8. The laminated body according to claim 7, wherein
   the protective layer includes a thermosetting resin.

9. The laminated body according to any one of claims 1 to 8, wherein
   the substrate layer is a biaxially-oriented film.

10. The laminated body according to claim 2 or 5, further comprising a deposition layer between the substrate layer and the sealant layer.

11. The laminated body according to claim 1, wherein
the substrate layer and the sealant layer are laminated via a first adhesive layer, and the first adhesive layer includes a urethane-based adhesive.

12. The laminated body according to claim 4, wherein

the substrate layer and the sealant layer are laminated via a first adhesive layer, and the first adhesive layer includes a urethane-based adhesive, and
a difference between the tensile elastic modulus of the substrate layer in the machine direction (MD) and the tensile elastic modulus of the sealant layer in the machine direction (MD) is 300 to 1400 MPa at 23 °C.

13. The laminated body according to claim 2 or 3, wherein
the substrate layer and the intermediate layer are laminated via a first adhesive layer, the intermediate layer and the sealant layer are laminated via a second adhesive layer, and the second adhesive layer includes a gas barrier adhesive.

14. The laminated body according to claim 5 or 6, wherein

the substrate layer and the intermediate layer are laminated via a first adhesive layer, the intermediate layer and the sealant layer are laminated via a second adhesive layer, and the second adhesive layer includes a gas barrier adhesive, and
a difference between the tensile elastic modulus of the substrate layer in the machine direction (MD) and the tensile elastic modulus of the intermediate layer in the machine direction (MD) is 300 to 1400 MPa at 23 °C.

15. The laminated body according to any one of claims 1 to 14, wherein
the sealant layer is white in color.

16. The laminated body according to any one of claims 1 to 15, wherein
a percentage of polyethylene in the laminated body is 90 mass% or greater.

17. A packaging material comprising the laminated body according to any one of claims 1 to 16.

18. The packaging material according to claim 17, wherein
the packaging material is a standing pouch.

19. A packaging body comprising:
the packaging material according to claim 17 or 18; and contents accommodated in the packaging material.

FIG.1

FIG.2

## INTERNATIONAL SEARCH REPORT

International application No.

**PCT/JP2024/004871**

### A. CLASSIFICATION OF SUBJECT MATTER

*B32B 27/32*(2006.01)i; *B65D 65/40*(2006.01)i
FI:   B32B27/32 E; B65D65/40 D

According to International Patent Classification (IPC) or to both national classification and IPC

### B. FIELDS SEARCHED

Minimum documentation searched (classification system followed by classification symbols)

B32B27/32; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-160095 A (OKURA IND. CO., LTD.) 11 October 2021 (2021-10-11)<br>entire text | 1-19 |
| A | JP 2022-39843 A (JAPAN POLYETHYLENE CORP.) 10 March 2022 (2022-03-10)<br>entire text | 1-19 |
| A | JP 2023-7518 A (TOPPAN PRINTING CO., LTD.) 19 January 2023 (2023-01-19)<br>entire text | 1-19 |
| P, A | JP 2023-42364 A (SUMITOMO BAKELITE CO., LTD.) 27 March 2023 (2023-03-27)<br>entire text | 1-19 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/004871**

| Patent document cited in search report | | | Publication date (day/month/year) | Patent family member(s) | Publication date (day/month/year) |
|---|---|---|---|---|---|
| JP | 2021-160095 | A | 11 October 2021 | (Family: none) | |
| JP | 2022-39843 | A | 10 March 2022 | (Family: none) | |
| JP | 2023-7518 | A | 19 January 2023 | WO 2021/125100 A1 | |
| JP | 2023-42364 | A | 27 March 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020055157 A